(19)

Europäisches
Patentamt
European
Patent Office
Office européen
des brevets

(11) **EP 3 539 389 A1**

(12) **EUROPEAN PATENT APPLICATION**
published in accordance with Art. 153(4) EPC

(43) Date of publication:
**18.09.2019 Bulletin 2019/38**

(21) Application number: **18756589.0**

(22) Date of filing: **21.02.2018**

(51) Int Cl.:
*A23D 7/00* (2006.01)    *A23D 9/00* (2006.01)
*A23L 27/10* (2016.01)    *A23L 27/60* (2016.01)

(86) International application number:
**PCT/JP2018/006205**

(87) International publication number:
**WO 2018/155488 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **22.02.2017  JP 2017031523
15.09.2017  PCT/JP2017/033406**

(71) Applicant: **Mizkan Holdings Co., Ltd.
Handa-shi, Aichi 475-8585 (JP)**

(72) Inventors:
• **HIGUCHI, Tatsuya
Handa-shi
Aichi 475-8585 (JP)**
• **IHARA, Junichiro
Handa-shi
Aichi 475-8585 (JP)**

(74) Representative: **Mewburn Ellis LLP
City Tower
40 Basinghall Street
London EC2V 5DE (GB)**

(54) **FOOD-PARTICLE-CONTAINING OIL/FAT COMPOSITION AND METHOD FOR PRODUCING SAME**

(57)    To provide a composition allowing various vegetables, fruits, algae and the like to stably exist in the composition and having extensive utility where the composition can be used in various applications.

A fine food particle-containing oil/fat composition comprising:
fine particles of at least one food selected from the group consisting of a vegetable, a fruit and an alga; and
an oil/fat,

and having:
(1) a fine food particle content of 2% by mass or more and 98% by mass or less,
(2) a total oil/fat proportion of 10% by mass or more and 98% by mass or less,
(3) a modal diameter in an ultrasonicated state of 0.3 μm or more and 200 μm or less, and
(4) a water content of less than 20% by mass.

EP 3 539 389 A1

**Description**

Technical Field

The present invention relates to a fine food particle-containing oil/fat composition containing a vegetable or the like, and a method for producing the same.

Background Art

Vegetables, fruits, algae and the like contain various active components and, accordingly, it has conventionally been desired so far that compositions containing them were used in various applications. However, such compositions are unstable, and their utility is impaired as the compositions are altered, thus they are hindered from use in various applications. To date, there has been no composition which allows various vegetables, fruits, algae, or the like to stably exist in the composition and which has extensive utility where the composition can be used in various applications.

There is a method where vegetables, fruits, algae, or the like are used as powder compositions, but the method is disadvantageous due to their low stability. There are reports of compositions containing vegetables, fruits, algae, or the like, such as a condiment which contains pulverized green and yellow vegetables and is obtained by pulverizing green and yellow vegetables in the presence of an oil (Patent Literature 1), and a spread which is obtained by pulverizing a non-nut plant material to form a powder having an average particle size of less than about 100 $\mu$m and then exposing the powder having an average particle size of less than about 100 $\mu$m to an increased temperature (Patent Literature 2). There are reports of sweet-bread and sandwich fillings containing fairly small amounts of dried vegetables and fruits (Patent Literature 3 and Patent Literature 4).

Citation List

Patent Literature

Patent Literature 1: JP-A-2006-141291
Patent Literature 2: JP-A-2009-543562
Patent Literature 3: JP-A-hei 2-186942
Patent Literature 4: JP-A-hei 7-327605

Summary of Invention

Technical Problem

However, the means of Patent Literature 1 does not solve the stability issue because the obtained food contains a large amount of vegetable-derived water, and the composition becomes unstable due to the large amount of water. In addition, Patent Literature 1 relates to an invention concerning beans which, in general, barely contain water, and it is difficult to apply the teaching of Patent Literature 1 to vegetables which generally contain a large amount of water. The method of Patent Literature 2 is not preferable because the powder after particle size reduction is further exposed to an increased temperature to create the desired nut flavor, thereby impairing the stability of the composition by excessive heating. Accordingly, none of these means can achieve a composition which allows various vegetables, fruits, algae, or the like to stably exist in the composition and which has extensive utility where the composition can be used in various applications. In Patent Literature 3 and Patent Literature 4, although vegetables and fruits are contained in an amount of 5 to 14%, they are used merely as supplements for imparting a flavor, and the powdered foods are mostly composed of sugars and food materials such as tuna and are not stabilized in the composition.

Accordingly, the present invention aims to provide a composition which allows various vegetables, fruits, algae, or the like to stably exist in the composition and which has extensive utility where the composition can be used in various applications.

Solution to Problem

Having conducted extensive research concerning a means of providing a composition which allows various vegetables, fruits, algae, or the like to stably exist in the composition and which has extensive utility where the composition can be used in various applications, the present inventors found that a composition having industrially preferable properties, in which various vegetables, fruits, algae, or the like are stably retained in an oil/fat and which can be used in various applications, can be formed not by mixing vegetables, fruits, algae, or the like with an oil/fat as they are, but by regulating properties such as the moisture content and the modal diameter of a composition containing fine particles of various vegetables, fruits, algae, or the like and an oil/fat in a specific quantity ratio, and accomplished the present invention.

That is, the present invention relates to [1] to [54] below.

[1] A fine food particle-containing oil/fat composition comprising:

fine particles of at least one food selected from the group consisting of a vegetable, a fruit and an alga; and an oil/fat, and having:

(1) a fine food particle content of 2% by mass or more and 98% by mass or less,
(2) a total oil/fat proportion of 10% by mass or more and 98% by mass or less,
(3) a modal diameter in an ultrasonicated state of 0.3 $\mu$m or more and 200 $\mu$m or less, and
(4) a water content of less than 20% by mass.

[2] The fine food particle-containing oil/fat composition according to [1], having a maximum particle size of 30 $\mu$m or more before ultrasonication.

[3] The fine food particle-containing oil/fat composition according to [1] or [2], having a consistency of 0.1 cm or more and 28 cm or less as measured at 20°C for 1 second by using a Bostwick consistometer.

[4] The fine food particle-containing oil/fat composition according to any one of [1] to [3], having a fine food particle content of 15% by mass or more.

[5] The fine food particle-containing oil/fat composition according to any one of [1] to [4], wherein an oil/fat portion of the composition has a Bostwick consistency of 10 cm or more as measured at 20°C for 10 seconds by using a Bostwick consistometer.

[6] The fine food particle-containing oil/fat composition according to any one of [1] to [5], wherein two or more fats and oils including a liquid oil/fat are used, and 90% by mass or more of an entirety of the fats and oils is a liquid edible oil/fat.

[7] The fine food particle-containing oil/fat composition according to any one of [1] to [6], wherein a total mass of the vegetables, the fruits, and the algae accounts for 30% by mass or more of a total mass of insoluble components in the composition.

[8] The fine food particle-containing oil/fat composition according to any one of [1] to [7], wherein the fine food particles are fine particles of a food having an oil/fat content of 50% by mass or less.

[9] The fine food particle-containing oil/fat composition according to any one of [1] to [8], having a total luminous transmittance of 99% or less when diluted to a fine food particle content of 0.06% by mass.

[10] The fine food particle-containing oil/fat composition according to any one of [1] to [9], having a haze value of 11% to 70% when diluted to a fine food particle content of 0.06% by mass.

[11] The fine food particle-containing oil/fat composition according to any one of [1] to [10], having a diffuse transmittance of 11% or more when diluted to a fine food particle content of 0.06% by mass.

[12] The fine food particle-containing oil/fat composition according to any one of [1] to [11], having a water activity of 0.97 or less.

[13] The fine food particle-containing oil/fat composition according to any one of [1] to [12], having a water absorption index of 0.5 or more and 10 or less.

[14] The fine food particle-containing oil/fat composition according to any one of [1] to [13], having a 50% cumulative diameter (median diameter) in an ultrasonicated state of 0.3 $\mu$m or more and 150 $\mu$m or less.

[15] The fine food particle-containing oil/fat composition according to any one of [1] to [14], having a consistency of 1.0 cm or more and 28 cm or less as measured at 20°C for 1 second by using a Bostwick consistometer.

[16] The fine food particle-containing oil/fat composition according to any one of [1] to [15], wherein the fine food particles are obtained by subjecting a dried food to a medium stirring mill processing.

[17] The fine food particle-containing oil/fat composition according to any one of [1] to [16], wherein the food has a water activity of 0.10 or more and 0.95 or less.

[18] The fine food particle-containing oil/fat composition according to any one of [1] to [17], not comprising an emulsifier as a food additive preparation.

[19] A food/drink comprising the fine food particle-containing oil/fat composition according to any one of [1] to [18].

[20] A liquid condiment comprising the fine food particle-containing oil/fat composition according to any one of [1] to [18].

[21] A method for producing the fine food particle-containing oil/fat composition according to any one of [1] to [18], the method comprising blending an oil/fat with dried fine food particles of at least one selected from the group consisting of a dried vegetable, a dried fruit and a dried alga.

[22] A method for producing the fine food particle-containing oil/fat composition according to any one of [1] to [21], the method comprising subjecting a dried food of at least one selected from the group consisting of a dried vegetable, a dried fruit and a dried alga to a pulverization processing in the presence of an oil/fat.

[23] The method according to [22], wherein the pulverization processing is a medium stirring mill pulverization processing.

[24] A fine food particle-containing oil/fat composition, wherein at least one dried food selected from the group consisting of a dried vegetable, a dried fruit and a dried alga is subjected to a particle size reduction processing in the presence of an oil/fat, and the fine food particle-containing oil/fat composition has:

(1) a fine food particle content of 2% by mass or more and 98% by mass or less,
(2) a total oil/fat proportion of 10% by mass or more and 98% by mass or less,
(3) a modal diameter in an ultrasonicated state of 0.3 $\mu$m or more and 200 $\mu$m or less, and
(4) a water content of less than 20% by mass.

[25] The fine food particle-containing oil/fat composition according to [24], having a maximum particle size of 30 $\mu$m or more before ultrasonication.

[26] The fine food particle-containing oil/fat composition according to [24] or [25], having a consistency of 0.1 cm or more and 28 cm or less as measured at 20°C for 1 second by using a Bostwick consistometer.

[27] The fine food particle-containing oil/fat composition according to any one of [24] to [26], having a fine food particle content of 15% by mass or more.

[28] The fine food particle-containing oil/fat composition according to any one of [24] to [27], wherein an oil/fat portion of the composition has a Bostwick consistency of 10 cm or more as measured at 20°C for 10 seconds by using a Bostwick consistometer.

[29] The fine food particle-containing oil/fat composition according to any one of [24] to [28], wherein two or more fats and oils including a liquid oil/fat are used, and 90% by mass or more of an entirety of the fats and oils is a liquid edible oil/fat.

[30] The fine food particle-containing oil/fat composition according to any one of [24] to [29], wherein a total weight of the vegetables, the fruits, and the algae accounts for 30% by mass or more of a total weight of insoluble components in the composition.

[31] The fine food particle-containing oil/fat composition according to any one of [24] to [30], wherein the fine food particles are fine particles of a food having an oil/fat content of 50% by mass or less.

[32] The fine food particle-containing oil/fat composition according to any one of [24] to [31], having a total luminous transmittance of 99% or less when diluted to a fine food particle content of 0.06% by mass.

[33] The fine food particle-containing oil/fat composition according to any one of [24] to [32], having a haze value of 11% to 70% when diluted to a fine food particle content of 0.06% by mass.

[34] The fine food particle-containing oil/fat composition according to any one of [24] to [33], having a diffuse transmittance of 11% or more when diluted to a fine food particle content of 0.06% by mass.

[35] The fine food particle-containing oil/fat composition according to any one of [24] to [34], having a water activity of 0.97 or less.

[36] The fine food particle-containing oil/fat composition according to any one of [24] to [35], having a water absorption index of 0.5 or more and 10 or less.

[37] The fine food particle-containing oil/fat composition according to any one of [24] to [36], having a 50% cumulative diameter (median diameter) in an ultrasonicated state of 0.3 $\mu$m or more and 150 $\mu$m or less.

[38] The fine food particle-containing oil/fat composition according to any one of [24] to [37], having a consistency of 1.0 cm or more and 28 cm or less as measured at 20°C for 1 second by using a Bostwick consistometer.

[39] A food/drink comprising the fine food particle-containing oil/fat composition according to any one of [24] to [38].

[40] A liquid condiment comprising the fine food particle-containing oil/fat composition according to any one of [24] to [38].

[41] A method for producing a fine food particle-containing oil/fat composition, the method comprising subjecting a food-containing oil/fat composition having a total content of at least one food selected from the group consisting of a vegetable, a fruit and an alga of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

[42] A method for lowering water activity of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[43] A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

[44] A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a water absorption index of the food-containing oil/fat composition after the processing is at least 0.1 higher than the water absorption index before the processing.

[45] A method for increasing a water absorption index of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[46] A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a water absorption index of the food-containing oil/fat composition after the processing is at least 0.1 higher than the water absorption index before the processing.

[47] A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a haze value of the food-containing oil/fat composition after the processing is at least 1 higher than the haze value before the processing.

[48] A method for increasing a haze value of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[49] A method for producing a fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a haze value of a food-containing oil/fat after the processing is at least 1 higher than the haze value before the processing.

[50] A method for enhancing taste extension of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[51] A method for enhancing a swallowing sensation of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[52] A method for enhancing stability of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[53] A method for improving smoothness of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

[54] A method for improving an initial taste of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

Advantageous Effects of Invention

The present invention provides a composition which allows various vegetables, fruits, algae, or the like to stably exist in the composition and which has extensive utility where the composition can be used in various applications.

Description of Embodiments

Below, two aspects are mainly described as examples of the embodiments of the present invention, but the present invention is not limited to those aspects and can be reduced to practice by adding any modifications without departing from the gist of the present invention.

[First Aspect]

The fine food particle-containing oil/fat composition of the present invention is a composition comprising:

fine particles of at least one food selected from the group consisting of a vegetable, a fruit and an alga; and
an oil/fat,

and having:

(1) a fine food particle content of 2% by mass or more and 98% by mass or less,
(2) a total oil/fat proportion of 10% by mass or more and 98% by mass or less,
(3) a modal diameter in an ultrasonicated state of 0.3 $\mu$m or more and 200 $\mu$m or less, and
(4) a water content of less than 20% by mass.

Recently, with increasing health consciousness, it has been strongly desired to efficiently consume foods such as vegetables and fruits containing vitamins, dietary fiber, minerals, and other nutrients because malnutrition leads to lifestyle-related diseases, but due to reasons such as a high water content, it has been physically and psychologically difficult to consume large amounts of vegetables, fruits and the like. Meanwhile, methods for supplementing such nutrients by dietary supplements or the like are also proposed, but such methods are nothing but supplementary, and methods of consuming such nutrients by way of daily diet have been sought after. According to the invention of the first aspect, various vegetables, fruits, and algae can be easily and efficiently consumed in a daily diet.

That is, the invention of the first aspect can provide a fine food particle-containing oil/fat composition having excellent edibility, which tastes well and has industrially superior qualities such as good storability and dispersibility as well as extensive utility when used in a food/drink.

The food (food material) which is the ingredient of fine food particles used in the first aspect is at least one selected from the group consisting of a vegetable (including potato and mushroom), a fruit and an alga, including processed products thereof (including those subjected to pre-processing such as cooking, removal of harshness, peeling, removal of seeds, ripening, salting, and pericarp processing).

Any vegetables can be used as long as they are consumed as food and, in particular, radish, carrot, burdock, rutabaga, beet, beetroot, parsnip, turnip, black salsify, sweet potato, cassava, yacon, taro, aroid, konjac yam, tashiroimo (Polynesian arrowroot), lotus root, potato, purple sweet potato, Jerusalem artichoke, kuwai, shallot, garlic, rakkyou, lily bulb, adder's-tongue, kale, yam, yamanoimo, nagaimo, onion, asparagus, udo, cabbage, lettuce, spinach, Chinese cabbage, rape, komatsuna, bok choy, leek, spring onion, nozawana, butterbur, fudansou (swiss chard), potherb mustard, tomato, eggplant, pumpkin, bell pepper, cucumber, Japanese ginger, cauliflower, broccoli, edible chrysanthemum, bitter melon, okra, artichoke, zucchini, sugar beet, ginger, perilla, wasabi, paprika, herbs (watercress, coriander, water spinach, celery, tarragon, chives, chervil, sage, thyme, laurel, parsley, mustard green (leaf mustard), Japanese ginger, mugwort, basil, oregano, rosemary, peppermint, savory, lemongrass, dill, wasabi leaf, leaf of Japanese pepper, and stevia), bracken, Asian royal fern, kudzu, tea plant (tea), bamboo shoot, shiitake, matsutake, Jew's ear, hen of the woods, polypore, oyster mushroom, king trumpet mushroom, enokitake, shimeji, honey mushroom, common mushroom, butterscotch mushroom, Jersey cow mushroom, hatsutake, chichitake and the like can be preferably used. Moreover, carrot, pumpkin, tomato, paprika, cabbage, beet, beet root, onion, broccoli, asparagus, purple sweet potato, and sweet potato are particularly preferable, and carrot, pumpkin, tomato, paprika, and broccoli are most preferable.

That is, the present invention includes the following embodiments:

[1] An embodiment wherein a pumpkin is used as one of the vegetables.

[2] An embodiment wherein a tomato is used as one of the vegetables.

[3] An embodiment wherein a paprika is used as one of the vegetables.

[4] An embodiment wherein a cabbage is used as one of the vegetables.

[5] An embodiment wherein a beetroot is used as one of the vegetables.

[6] An embodiment wherein an onion is used as one of the vegetables.

[7] An embodiment wherein a broccoli is used as one of the vegetables.

[8] An embodiment wherein an asparagus is used as one of the vegetables.

[9] An embodiment wherein a purple sweet potato is used as one of the vegetables.

[10] An embodiment wherein a sweet potato is used as one of the vegetables.

Any fruits may be employed as long as they are consumable and, in particular, Chinese quince, Chinese white pear, pear, quince, medlar, juneberry, shipova, apple, American cherry (black cherry, dark cherry), apricot, plum, cherry (sweet cherry), sour cherry, blackthorn, Japanese plum, peach, gingko, chestnut, chocolate vine, fig, persimmon, black currant, raspberry, kiwifruit (kiwi), oleaster, mulberry, cranberry, cowberry, pomegranate, hardy kiwi, sea buckthorn (saji, hippophae, seaberry), gooseberry, jujube, Japanese bush cherry, honeysuckle, bilberry, red currant, grape, blackberry, blueberry, pawpaw, matsubusa, raspberry, Nanking cherry, mandarin orange, kumquat, trifoliate orange, olive, loquat, wax myrtle, monk fruit, tropical fruits (such as mango, mangosteen, papaya, cherimoya, atemoya, banana, durian, star fruit, guava, pineapple, acerola, passion fruit, dragon fruit, litchi, and canistel), strawberry, watermelon, melon, avocado, miracle fruit, orange, lemon, prune, yuzu citron, sudachi citron, grapefruit, bitter orange, shiikwaasa and the like can be preferably used. Moreover, avocado, yuzu citron, grape, peach, banana, orange, mandarin orange, and fig are particularly preferable, and avocado and yuzu citron are most preferable.

Any algae may be employed as long as they are consumable, such as large algae, e.g., kelp, wakame, nori, green laver, and gelidiaceae, and microalgae such as green algae, red algae, blue-green algae, dinoflagellate, and euglena. In particular, sea lettuce, green laver, anaaosa, sea grape (kubirezuta), katashiogusa, kubirezuta, kuromiru, tamamiru, Japanese sea lily, hitoegusa, hiraaonori, fusaiwazuta, gutweed, akamoku, amijigusa, sea oak, antokume, ishige, ichimegasa, iroro, iwahige, umi toranoo, umi uchiwa, oobamoku, Okinawa mozuku, kaigaraamanori, kagomenori, kajime, kajime (sea oak), kayamonori, gibasa (akamoku, ginnbasou, jinbasou, jibasa), sanadagusa, shiwanokawa, shiwayahazu, European hanover, tsuruarame, nanori (kayamonori), nebarimo, nokogirimoku, habanori, hijiki, hirome, fukuronori, futomozuku, hondawara, kelp (onikonbu, makonbu), hornwort, mugiwaranori (kayamonori), muchimo, mozuku, yuna, wakame, asakusanori, ibotsunomata, ushikenori, usukawakaninote, ezotsunomata (kurohaginansou), oobusa, ogonori, okitsunori, obakusa, katanori, kabanori, kamogashiranori, kijinoo, kurohaginansou (ezotsunomata), sakuranori, shiramo, tanbanori, tsunomata, tsurushiramo, tsurutsuru, tosakanori, tosakamatsu, nogenori (fukurofunori), nori (susabinori), hanafunori, harigane, hiragaragara, hirakusa, hiramukade, pirihiba, fukurofunori, fushitsunagi, makusa, marubaamanori, mitsutesozo, euglena, chlorella, mirin, mukadenori, yuikiri, yukari, agar and the like can be suitably used. Moreover, kelp (onikonbu, makonbu) and nori are particularly suitable, and makonbu is most suitable.

Algae contain large amounts of polysaccharides and the like and so they are hard to reduce in size, and therefore vegetables and fruits are more preferable. Since food materials having a water content of 50% or more in an undried state have poor stability (light resistance in particular) when formed into oil/fat compositions, the technique of the present invention, which is capable of producing a highly stable oil/fat composition, is useful. That is, as long as a specific amount of the foods of the present invention (vegetables, fruits, and algae) is contained as an insoluble component in fine food particles, other insoluble components including beans, grains, and seeds may be contained in the composition of the present invention. Since the effects of the present invention are exerted in embodiments where the mass of the foods of the present invention (vegetables, fruits, and algae) accounts for 30% by mass or more of the total mass of insoluble components in the composition, an embodiment where the mass of the food of the present invention accounts for 30% by mass or more is preferable, an embodiment where the mass of the food of the present invention accounts for 50% by mass or more is more preferable because the effect is more likely exerted, an embodiment where the mass of the food of the present invention accounts for 70% by mass or more is more preferable, an embodiment where the mass of the food of the present invention accounts for 90% by mass or more is more preferable, and an embodiment where the mass of the food of the present invention accounts for 100% by mass is most preferable. For example, in the case of a composition containing 20 parts by mass of fine food particles derived from a dried product of a carrot which is a vegetable as an insoluble component, 30 parts by mass of sugar which is another food material, and 50 parts by mass of an oil/fat, sugar does not dissolve in the oil/fat in the composition, so the proportion of the food of the present invention (dried carrot: 20% by mass) in insoluble components (dried carrot + sugar: 50% by mass) is 40% by mass.

The present invention includes an embodiment where beans (such as mung beans) are not contained in the composition of the present invention, an embodiment where grains (such as rice) are not contained in the composition of the present invention, an embodiment where neither beans nor grains are contained in the composition of the present invention, and an embodiment where none of the beans, grains, and seeds are contained in the composition of the present invention.

One of those food materials may be used singly, or two or more can be used in combination.

An oil/fat composition in which a dried food is used as the food material has a remarkably increased property of exerting an oil/fat consistency when water is added, and thus a dried food is preferably used. As for the quality of the dried food, the water activity of the food (food material) is preferably 0.95 or less because the oil/fat consistency is likely exerted when water is added and the applicability to various foods and drinks is increased, and more preferably 0.9 or less, more preferably 0.8 or less, and even more preferably 0.65 or less. Moreover, for facilitating storage and management, the water activity of the food is preferably 0.10 or more, more preferably 0.20 or more, even more preferably 0.30 or more, and most preferably 0.40 or more.

In the composition of the first aspect, the water content needs to be regulated to a specific range, and a drying processing may be performed to regulate the water content. The drying processing may be performed at any time, and a method involving a food material which has been subjected to a drying processing in advance is preferable. The method for drying the food material may be any method commonly used for drying a food, and examples of drying methods include drying in the sun, drying in the shade, freeze drying, air drying (such as hot-air drying, fluidized-bed drying, spray drying, drum drying, and low-temperature drying), pressure drying, reduced-pressure drying, microwave drying, and oil heat drying. It is more preferable to use a method involving air drying or freeze drying because it hardly changes color or flavor which the food material originally has, and it hardly produces a smell (such as a burning smell) other than that of the food.

It is more preferable to perform a particle size reduction processing in an oil/fat by using a food material which has been subjected to a drying processing in advance because a variety of preferable properties are exerted, such as lowered water activity, enhanced taste extension, enhanced smoothness, and an increased water absorption index.

Oil/fat compositions, in which a food material having a low lipid content is used, likely have a poor separation stability when left to stand, and therefore the technique of the present invention, which is capable of producing a highly stable oil/fat composition, is more useful and is thus preferable. Specifically, the fine food particles used in the present invention are preferably a food material having an oil/fat content of 50% by mass or less, more preferably a food material having an oil/fat content of 40% by mass or less, even more preferably a food material having an oil/fat content of 30% by mass or less, and most preferably a food material having an oil/fat content of 20% by mass or less.

The modal diameter of the composition of the first aspect in an ultrasonicated state is 0.3 $\mu$m or more and 200 $\mu$m or less. The modal diameter is preferably regulated to 200 $\mu$m or less because the aftertaste can be felt for a long time (hereinafter referred to as "taste extension") during eating, more preferably regulated to 150 $\mu$m or less, more preferably regulated to 100 $\mu$m or less, even more preferably regulated to 80 $\mu$m or less, even more preferably regulated to 45 $\mu$m or less, even more preferably regulated to 30 $\mu$m or less, even more preferably regulated to 20 $\mu$m or less, and most preferably regulated to 11 $\mu$m or less. The modal diameter is 0.3 $\mu$m or more for production efficiency, 2.8 $\mu$m or more for greater efficiency, and 4.6 $\mu$m or more for greater efficiency.

Particle sizes in the present invention all represent those measured in terms of volume, and unless specified otherwise, the measured value of a particle size represents a result obtained by analyzing an ultrasonicated sample (there is a tendency that ultrasonication breaks clusters formed of a plurality of fine particles and that a measured value is about several times to several tens of times smaller, and therefore a value completely different from the measured value of the particle size before ultrasonication is obtained). The modal diameter represents the particle size of a channel having the largest particle frequency % concerning a particle size distribution for each channel obtained by measuring a composition using a laser diffraction particle size distribution analyzer. When there are a plurality of channels having exactly the same particle frequency %, the particle size of a channel having the smallest particle size among those channels is employed. When the particle size distribution is a normal distribution, the value matches the median diameter, but when the particle size distribution is biased and, in particular, when there are multiple particle size distribution peaks, the numerical values vary greatly. The particle size distribution measurement of a sample by a laser diffraction particle size distribution analyzer can be performed by, for example, the following method. Note that when the sample is a thermoplastic solid, the sample can be heat-treated to liquefy the sample and then subjected to an analysis by a laser diffraction particle size distribution analyzer.

For example, the Microtrac MT3300 EX II system of MicrotracBEL Corp. can be used as a laser diffraction particle size distribution analyzer. As a solvent during measurement, 95% ethanol (such as Japan Alcohol Trading Co., Ltd., special type of alcohol, traceable 95, 95 degrees, first grade) can be used, and as measurement application software, Data Management System version 2 (DMS2, MicrotracBEL Corp.) can be used. In the measurement, washing is performed by pressing the washing button on the measurement application software, then the Set Zero button on the software is pressed to set zero, and a sample can be directly introduced until within an appropriate concentration range in sample loading. As for the maximum particle size before ultrasonication, the measurement result of laser diffraction at a flow rate of 60% for a measurement time of 10 seconds after entering an appropriate concentration range can be regarded as a measured value, and as for the modal diameter, 90% cumulative diameter (d90), median diameter (d50), and arithmetic standard deviation in an ultrasonicated state, the measurement results of laser diffraction at a flow rate of 60% for a measurement time of 10 seconds after the ultrasonication button on the aforementioned software is pressed to perform ultrasonication at a frequency of 40 kHz at an output of 40 W for 180 seconds and then performing degassing 3 times can be regarded as measured values.

As for the measurement conditions, measurement can be performed under conditions having distribution indicator: volume, particle refractive index: 1.60, solvent refractive index: 1.36, upper measurement limit ($\mu$m) = 2,000.00 $\mu$m, lower measurement limit ($\mu$m) = 0.021 $\mu$m.

When measuring the particle size distribution for each channel (CH) in the present invention, measurement can be made by using the particle size for each measurement channel provided in Table 1 as a standard. The particle size specified for each channel is also referred to as the "particle size of XX channel". The particle frequency % of each channel (also referred to as the "particle frequency % of XX channel") can be determined by measuring for each channel the frequency of particles having a particle size which is equal to or smaller than the particle size specified for each channel and which is larger than the particle size specified for a channel having one larger number (in the largest channel in the measurement range, the particle size at the lower measurement limit) and using the total frequency of all channels within the measurement range as a denominator. For example, the particle frequency % of channel 1 represents the frequency % of particles having 2,000.00 $\mu$m or less and more than 1,826.00 $\mu$m.

The particle size of the composition of the first aspect is preferably regulated such that the median diameter in an ultrasonicated state is 150 $\mu$m or less because a good swallowing sensation is provided during eating, more preferably regulated to 135 $\mu$m or less, more preferably regulated to 80 $\mu$m or less, more preferably regulated to 40 $\mu$m or less, even more preferably regulated to 30 $\mu$m or less, particularly preferably regulated to 25 $\mu$m or less, and most preferably regulated to 16 $\mu$m or less. The median diameter in an ultrasonicated state is 0.3 $\mu$m or more for production efficiency, 2.5 $\mu$m or more for greater efficiency, and 9.0 $\mu$m or more for greater efficiency. The swallowing sensation represents the tactile sensation when a food/drink passes through the throat.

The median diameter (50% cumulative diameter) represents a numerical value at which the cumulative values of particle frequency % on the larger side and the smaller side are equal when the particle size distribution obtained by measuring the composition using a laser diffraction particle size distribution analyzer is divided into halves at a certain particle size, and is also denoted as d50.

The particle size of the oil/fat composition is preferably regulated such that the 90% cumulative diameter (d90) in an ultrasonicated state is 360 $\mu$m or less because the light resistance of the composition is remarkably enhanced and the visual agreeability is enhanced, more preferably regulated to 220 $\mu$m or less, more preferably regulated to 190 $\mu$m or less, more preferably regulated to 150 $\mu$m or less, even more preferably regulated to 90 $\mu$m or less, even more preferably regulated to 45 $\mu$m or less, particularly preferably regulated to 35 $\mu$m or less, and most preferably regulated to 28 $\mu$m or less. The 90% cumulative diameter in an ultrasonicated state is 0.4 $\mu$m or more for production efficiency, 5.9 $\mu$m or more for greater efficiency, and 11.1 $\mu$m or more for greatest efficiency. The 90% cumulative diameter represents a numerical value at which the ratio between the cumulative values of particle frequency % on the larger side and the smaller side is 1:9 when the particle size distribution obtained by measuring the composition using a laser diffraction particle size distribution analyzer is divided into halves at a certain particle size, and is also denoted as d90.

The composition of the first aspect is regulated to the aforementioned modal diameter in an ultrasonicated state and/or to the aforementioned median diameter in an ultrasonicated state and also is preferably regulated such that the arithmetic standard deviation thereof is 1 $\mu$m or more and 147 $\mu$m or less because the taste presentation of the composition is improved and the palatability is enhanced, more preferably regulated to 135 $\mu$m or less, more preferably regulated to 90 $\mu$m or less, more preferably regulated to 70 $\mu$m or less, even more preferably regulated to 60 $\mu$m or less, even more preferably regulated to 31 $\mu$m or less, particularly preferably regulated to 15 $\mu$m or less, and most preferably regulated to 9.5 $\mu$m or less. Moreover, the arithmetic standard deviation is more preferably 220% or less based on the modal diameter because the initial taste of the composition is enhanced, more preferably 200% or less, more preferably 150% or less, more preferably 110% or less, and most preferably 70% or less. The initial taste is a taste immediately felt when a food/drink is placed in the oral cavity, and represents a sensation which can be referred to as the taste instantly provided in the mouth.

The arithmetic standard deviation is 1 $\mu$m or more for production efficiency, 1.8 $\mu$m or more for greater efficiency, and 5.0 $\mu$m or more for greater efficiency.

As for the fine food particle content in the composition of the first aspect, the fine food particle content in a paste is measured where foods and the like larger than 2,000 $\mu$m (2 mm), which are not the measurement targets of laser diffraction particle size distribution measurement or a particle shape image analyzer, are excluded. When the paste contains foods and the like larger than 2 mm, for example, the content refers to the weight of the foods (vegetables, fruits, and algae) of the present invention in a precipitated fraction obtained by causing the paste to pass through a 9 mesh (2 mm openings) to remove foods and the like larger than 2 mm in the paste and then sufficiently removing the separated supernatant resulting from centrifugation. Since some of the oil/fat and water are incorporated in the precipitated fraction, the total amount of fine food particles represents the total weight of those components and the foods incorporated in the precipitated fraction. The fine food particle content in the composition is 2% by mass or more and 98% by mass or less, and a content of less than 2% by mass is not preferable because the composition exerts a greasy taste. A fine food particle content exceeding 98% by mass is not preferable because a "mealy" texture, which makes it difficult to consume the composition, is exerted. Concerning the composition of the first aspect, in order for a large amount of fine food particles not to exert neither a "mealy" texture nor a greasy taste in the mouth and to facilitate consumption, the fine food particle content is preferably 2% by mass or more, more preferably 8% by mass or more, even more preferably 15% by mass or more, and most preferably 30% by mass or more. From the view point of the "mealy" texture in particular, the fine food particle content is preferably 98% by mass or less, more preferably 95% by mass or less, more preferably 85% by mass or less, and most preferably 80% by mass or less. The "mealy" texture represents the texture of a grainy, unmoistened, dry food.

As for the fine food particle content in the present invention, the fine food particle content in the composition can be measured by, for example, causing a given amount of the composition to pass through a 9 mesh (a Tyler mesh), centrifuging the passed fraction at 15,000 rpm for 1 minute to sufficiently remove the separated supernatant, and measuring the weight of the foods (vegetables, fruits, and algae) of the present invention in the precipitated fraction. Concerning the residues on the mesh when particles were passed through a 9 mesh, after being sufficiently left to stand, fine food particles smaller than the 9-mesh openings were caused to sufficiently pass through with a spatula or the like so as not to change the particle size of the composition, and then the passed fraction was obtained.

Examples of the oil/fat used in the present invention include edible fats and oils, various fatty acids, and foods in which they are used as ingredients. Edible fats and oils are preferably used.

Examples of edible fats and oils include sesame oil, rapeseed oil, high-oleic rapeseed oil, soybean oil, palm oil, palm kernel oil, palm stearin, palm olein, fractionated palm oil (PMF), cottonseed oil, corn oil, sunflower oil, high-oleic sunflower oil, safflower oil, olive oil, linseed oil, rice oil, camellia oil, perilla oil, flavor oil, coconut oil, grape seed oil, peanut oil, almond oil, cacao butter, avocado oil, salad oil, canola oil, fish oil, beef tallow, pork fat, chicken fat, or medium chain fatty acid triglyceride (MCT), diglyceride, hardened oil, trans-esterified oil, milk fat, and Ghee. In particular, liquid edible fats and oils such as sesame oil, olive oil, rapeseed oil, soybean oil, milk fat, sunflower oil, rice oil and palm olein have the effect of increasing the smoothness of the food composition, enable the present invention to be more effectively used, and thus are more preferable.

The liquid edible oil/fat in the present invention represents an oil/fat having "a liquid-like fluidity at normal temperature (denoting 20°C in the present invention) (specifically, a Bostwick consistency at 20°C for 10 seconds in a Bostwick consistometer (a measured value of a distance that a sample flowed down in a trough at a predetermined temperature in a predetermined time) of 10 cm or more, more preferably 15 cm or more, and even more preferably 28 cm or more) ". In the present invention, the oil/fat portion in the composition (e.g., oil/fat components which are liberated when centrifuged at 15,000 rpm for 1 minute. Note that when the sample is a thermoplastic solid, the sample can be liquefied by a heating processing and then centrifuged) preferably has liquid-like fluidity (specifically, a Bostwick consistency at 20°C for 10 seconds in a Bostwick consistometer of 10 cm or more, more preferably 15 cm or more, and even more preferably 28 cm or more). Moreover, when two or more fats and oils including a liquid oil/fat are used, 90% by mass or more of the entirety of the fats and oils is preferably a liquid edible oil/fat, more preferably 92% by mass or more is a liquid oil/fat, more preferably 95% by mass or more is a liquid oil/fat, and most preferably 100% by mass is a liquid oil/fat. The edible oil/fat may be the oil/fat contained in the food material of the composition, but an oil/fat which has been subjected to an extractive purification is preferably added separately from the food material because such an oil/fat has better miscibility with the food material. An oil/fat which has been subjected to an extractive purification is preferably added in an amount of 10% by mass or more of the entirety of the fats and oils, and an oil/fat which has been subjected to an extractive purification is preferably added more preferably in an amount of 30% by mass or more of the entirety of the fats and oils.

The edible oil/fat is preferably an edible oil/fat in which the proportion of unsaturated fatty acids (the total proportion of monounsaturated fatty acids and polyunsaturated fatty acids) is greater than the proportion of saturated fatty acids in its composition because a particle size reduction processing can be efficiently performed, and an edible oil/fat in which the proportion of unsaturated fatty acids is greater than twice the proportion of saturated fatty acids is more preferable.

Examples of foods made from edible fats and oils as ingredients include butter, margarine, shortening, fresh cream, and soy-milk cream (such as "Ko-cream" (R) manufactured by Fuji Oil Co., Ltd.). In particular, foods whose physical property is liquid can be conveniently used. Among these, two or more edible fats and oils and foods made from such edible fats and oils as ingredients may be used in combination in a given ratio.

The "total oil/fat proportion" in the present invention represents the weight ratio of all oil/fat in the composition (i.e., all oil/fat including not only the oil/fat blended when preparing the composition but also the oil/fat contained in the fine food particles and other optional components) to the entirety of the composition. The total oil/fat proportion of the composition can be measured by, for example, analyzing the composition by the measurement method of "lipid" prescribed in The Law Concerning Standardization, etc. of Agricultural and Forestry Products (JAS method). A suitable measurement method can be used according to the properties of a composition, and the total oil/fat proportion can be measured by, for example, using the method for measuring a "oil/fat content" prescribed in the "Japan Agricultural Standards for Dressings". As described above, the total oil/fat proportion is 10% by mass or more and 98% by mass or less. When the proportion is less than 10% by mass, the amount of the oil/fat is excessively small, and fine food particles are not sufficiently dispersed in the oil/fat. Therefore, the total oil/fat proportion is preferably 10% by mass or more, more preferably 15% by mass or more, more preferably 20% by mass or more, and most preferably 30% by mass or more. When the total oil/fat proportion exceeds 98% by mass, a strongly greasy taste is exerted, which makes it difficult to consume the composition. Therefore, the total oil/fat proportion is preferably 98% by mass or less, more preferably 95% by mass or less, even more preferably 90% by mass or less, and most preferably 81% by mass or less.

The composition of the first aspect may contain water, but since water is likely to cause the composition to be discolored during storage, the water content in the composition is desirably less than 20% by mass, more desirably less than 15% by mass, more desirably 10% by mass or less, and more desirably 6% by mass or less. The water content in the composition of the first aspect represents the weight ratio of the total water content of the composition (i.e., all water including not only the water blended when preparing the composition but also the water contained in the fine food particles and other optional components) to the entirety of the composition. The total water content of the composition can be measured by, for example, analyzing the composition by the measurement method of "water" prescribed in The Law Concerning Standardization, etc. of Agricultural and Forestry Products (JAS method). A suitable measurement method can be used according to the properties of a composition, and the total water content can be measured by, for example, using the method for measuring "water" prescribed in the "Semi-Solid Dressings and Emulsified Liquid Dressings".

With a water activity exceeding 0.97, the composition of the first aspect is likely discolored during storage. Therefore, the water activity thereof is preferably regulated to 0.97 or less because the composition becomes unlikely to be discolored during storage, more preferably regulated to 0.9 or less, even more preferably regulated to 0.8 or less, even more preferably regulated to 0.65 or less, even more preferably regulated to 0.60 or less, and most preferably regulated to 0.50 or less. The water activity of the composition of the first aspect is regulated to 0.20 or more for production efficiency, regulated to 0.25 or more for production efficiency, and regulated to 0.30 or more for greater production efficiency.

Examples of methods for preparing the composition of the first aspect include a method involving blending or mixing an oil/fat with a food material which has been subjected to a particle size reduction processing, a method involving subjecting an oil/fat-containing food material to a specific pulverization processing or particle size reduction processing, and a method involving subjecting a food-containing oil/fat containing a specific food material in an oil/fat to a specific particle size reduction processing. In terms of simplicity of operation, a method involving subjecting an oil/fat-containing food material to a specific particle size reduction processing and a method involving subjecting a food-containing oil/fat containing a specific food material in an oil/fat to a specific particle size reduction processing are more preferable. A method involving subjecting a food-containing oil/fat containing a specific food material in an oil/fat to a specific particle size reduction processing is even more preferable, and the food material is particularly preferably a dried food material.

The means of a pulverization processing or particle size reduction used in the present invention is not particularly limited as long as it can reduce the food to a specific particle size, and may be any of the apparatuses referred to as a blender, a mixer, a mill, a kneader, a pulverizer, a disintegrator, an attritor and the like, may be any of dry pulverization and wet pulverization, and may be any of high temperature pulverization, normal-temperature pulverization, and low-temperature pulverization. For example, as a dry pulverizer, a medium stirring mill such as a dry bead mill or a ball mill (such as a tumbling type or a vibration type), a jet mill, a high-speed rotation impact mill (such as a pin mill), a roll mill, a hammer mill, or the like can be used. For example, as for wet pulverization, a medium stirring mill such as a bead mill or a ball mill (such as a tumbling type, vibration type, or planetary type mill), a roll mill, a colloid mill, a star burst, or a high-pressure homogenizer can be used. A means of particle size reduction by a medium stirring mill (a ball mill or a bead mill) or a high-pressure homogenizer can be more suitably used.

When particle size reduction is performed by any of such means to such an extent that particles having a maximum particle size before ultrasonication of 30 μm or more (i.e., a particle size close to the maximum particle size observable with the eyes under a microscope) are not contained, the structure of a food material is destroyed, and an undesirable flavor is likely imparted, and when particle size reduction is performed to such an extent that particles having a maximum particle size after ultrasonication of 30 μm or more are not contained, the structure of a food material is destroyed, and an undesirable flavor is even more likely imparted. Therefore, a method involving particle size reduction performed such that fine food particles having a maximum particle size before ultrasonication of more than 30 μm are contained is preferable, and a method involving particle size reduction performed such that fine food particles having a maximum particle size after ultrasonication of more than 30 μm are contained is more preferable. In particular, in the case of using a means of performing particle size reduction in a medium, such as a medium stirring mill or a high-pressure homogenizer, the structure of a food material is destroyed when particle size reduction is performed to such an extent that particles having a maximum particle size before ultrasonication of 30 μm or more are not contained, and an undesirable flavor is even more likely imparted. Therefore, a method involving particle size reduction performed such that fine food particles having a maximum particle size before ultrasonication of more than 30 μm are contained is preferable, and a method involving particle size reduction performed such that fine food particles having a maximum particle size after ultrasonication of more than 30 μm are contained is more preferable.

The "ultrasonication" in the present invention represents treating a sample before measurement with ultrasonic waves at a frequency of 40 kHz at an output of 40 W for 180 seconds. The maximum particle size before ultrasonication (the maximum particle size in a non-ultrasonicated state) of the fine food particle-containing oil/fat composition is preferably 30 μm or more, more preferably 40 μm or more, more preferably 50 μm or more, and most preferably 80 μm or more.

Performing a medium stirring mill processing before a high-pressure homogenizer processing or performing a medium stirring mill processing after a high-pressure homogenizer processing enables the composition to be more suitably used. As a high-pressure homogenizer, any apparatus which is normally usable as a high-pressure homogenizer is usable, and, for example, a PANDA 2K homogenizer (manufactured by Niro Soavi) is usable. As for the processing conditions, for example, a particle size reduction processing can be performed by way of a high-pressure homogenization processing performed at 100 MPa one or more times.

In particular, a pulverizing method involving a wet bead mill is preferable because a highly stable food composition is obtained which more unlikely undergoes oil/fat separation when left to stand than other processing methods. Although the principle is not clear, this is considered to be because the particle state of fine food particles is favorably changed by the bead mill processing. As for the conditions during the wet bead mill processing, the size and the packing ratio of beads, the outlet mesh size, the feeding rate of an ingredient slurry, mill rotation strength, a method involving a single passage (one pass) or a method involving multiple circulations (circulation type), and the like are suitably selected and regulated according to the size and the properties of a food material and the properties of the intended fine food particle-containing oil/fat composition. In particular, although the principle is not clear, subjecting a powdered food material, the median diameter of which has been regulated to 1,000 μm or less and 100 μm or more in advance, to a particle size reduction processing further increases adhesion to a target object, and is more preferable.

In producing the composition of the first aspect, although the principle is not clear, subjecting an oil/fat where a dried food is contained in the oil/fat in advance to a medium stirring mill processing and, in particular, a wet bead mill processing results in a remarkably increased ease of consumption of a utilized food when the food is eaten together with the fine food particle-containing oil/fat composition and thus is useful. The consistency (measurement temperature 20°C) of the food-containing oil/fat where a food is contained in an oil/fat which is before a particle size reduction processing is preferably regulated to 20 Pa·s or less, and regulating it to 8 Pa·s or less further increases the efficiency of particle size reduction processing and is thus useful. The consistency (measurement temperature 20°C) of the fine food particle-containing oil/fat composition is preferably regulated to 100 mPa·s or more, and with the consistency being regulated to 500 mPa·s or more, the retentivity of the utilized food in the mouth is increased and is thus more preferable.

The total luminous transmittance of the composition of the first aspect in a state of being diluted with water such that the fine food particle content thereof is 0.06% by mass is preferably regulated to 99% or less because the external color of the composition appears vividly, and most preferably regulated to 97.7% or less. The total luminous transmittance is preferably regulated to 90% or more because the external color of the composition appears vividly, and the total luminous transmittance is most preferably regulated to 93.0% or more. The total luminous transmittance is a luminous transmittance which takes reflection and scattering in consideration, and can be measured by, for example, a conventional method using a turbidity analyzer WA6000T (manufactured by Nippon Denshoku Industries Co., Ltd.) which is based on integrating sphere photoelectric photometry. That is, for example, in the case of a fine food particle-containing oil/fat composition having a fine food particle content of 75% by mass, the weight of the composition corresponding to the fine food particle content of 0.06 g is 0.08 g (0.08 g × 0.75 = 0.06 g), therefore the total luminous transmittance can be measured by adding water to 0.08 g of the composition so as to be 100 g in total, sufficiently stirring the mixture to produce a 0.06% by mass diluted solution, placing the solution in a quartz cell having an optical path length of 5 mm, and using water as a control.

The diffuse transmittance of the composition of the first aspect in a state of being diluted with water such that the fine food particle content thereof is 0.06% by mass is preferably regulated to 11% or more because the external color of the composition appears more vividly, more preferably regulated to 19% or more, more preferably regulated to 26% or more, more preferably regulated to 30% or more, more preferably regulated to 35% or more, and most preferably regulated to 40% or more. The upper limit of the diffuse transmittance is preferably 60% or less in order for the color of the composition to be a natural color. The diffuse transmittance is the transmittance of diffused light which includes light beams traveling through a sample but does not include components existing in parallel with the direction of the light beams, and can be measured by, for example, a conventional method using a turbidity analyzer WA6000T (manufactured by Nippon Denshoku Industries Co., Ltd.) which is based on integrating sphere photoelectric photometry. A measurement sample can be prepared by the same method as the total luminous transmittance.

The haze value of the composition of the first aspect in a state of being diluted with water such that the fine food particle content thereof is 0.06% by mass is preferably regulated to 11% or more because the external color of the composition appears more vividly, more preferably regulated to 20% or more, more preferably regulated to 26% or more, more preferably regulated to 30% or more, more preferably regulated to 34% or more, and most preferably regulated to 41% or more. The upper limit of the haze value is preferably 70% or less in order for the color of the composition to be a natural color, and is more preferably 60% or less.

The composition which has been further subjected to a bead mill processing develops a more vivid color and is thus most preferable. Although the reason is not clear, the composition which has undergone particle size reduction may have unmeasurable changes such as a conformational change.

The haze value can be determined according to the following formula by dividing the diffuse transmittance by the total luminous transmittance.

(Expression 1)

Haze value (%) = Diffuse transmittance / Total

luminous transmittance × 100

The acidity in terms of acetic acid of the composition of the first aspect is preferably regulated to 0.01% by mass or more because the taste of the composition can be felt for an extended period of time in the mouth, more preferably regulated to 0.1% by mass or more, and most preferably regulated to 0.2% by mass or more. Since the flavor of the oil/fat composition is impaired when the acidity in terms of acetic acid exceeds 10% by mass, the acidity in terms of acetic acid is preferably regulated to 10% by mass or less. The acidity in terms of acetic acid may be measured according to the method for measuring "acidity" prescribed in the Japanese Agricultural Standards for fermented vinegar except that the sample is collected on the weight basis, and can be regulated by using one or more acids such as acetic acid, citric acid, and hydrochloric acid, and by using one or more foods containing such acids.

The water absorption index of the composition of the first aspect is preferably regulated to 0.5 or more because the consistency adjustment of the composition of the first aspect is facilitated, and more preferably regulated to 1.0 or more, more preferably regulated to 2.0 or more, more preferably regulated to 3.0 or more, more preferably regulated to 3.5 or more, and most preferably regulated to 4.0 or more. From the viewpoint of maintaining the favorable flavor of the oil/fat composition, the water absorption index is preferably regulated to 10.0 or less, more preferably regulated to 9.0 or less, and most preferably regulated to 8.0 or less. The water absorption index is an index for evaluating the water retentivity of the composition. Commonly used oil/fat compositions do not mix with water and thus show a water absorption index of 0 or a very small value. The water absorption index can be measured by, for example, the following method. A given weight of a sample is placed in a stirring vessel, pure water at about 25°C is added dropwise at a rate of about 20 mL/min while stirring the sample (about 120 rpm), and while observing the state of the stirred sample, water is added until water is no longer miscible (oil-water separation occurs, and oil droplets form on the liquid surface). The state where water and the oil/fat are no longer miscible is regarded as an end point, and the water absorption index can be determined by the following formula where the total amount of added water is the amount of absorbed water. Measurement is performed at room temperature of about 25°C.

(Expression 2)

Water absorption index = Amount (mL) of absorbed

water / Weight (g) of oil/fat composition

The composition of the first aspect has physical properties of a substantially uniform dispersion without using a stabilizer or an emulsifier. Uniformity can be evaluated from the appearance after storing the fine food particle-containing oil/fat composition in a stationary state for about 12 hours. The composition having physical properties of a paste is preferable from the viewpoint of handleability. Moreover, the Bostwick consistency (measurement temperature 20°C) is more preferably 28.0 cm or less in one second, even more preferably 26.0 cm or less, even more preferably 20.0 cm or less, and most preferably 17.0 cm or less. From the viewpoint of taste, the Bostwick consistency (measurement temperature 20°C) is preferably 0.1 cm or more in one second, more preferably 1.0 cm or more, and most preferably 2.0 cm or more. The Bostwick consistency in the present invention can be measured by using a Bostwick consistometer (in the present invention, a Bostwick consistometer is used which has a trough length of 28.0 cm and a Bostwick consistency, i.e., a flow-down distance for a sample in the trough, of 28.0 cm at most). Specifically, the Bostwick consistency can be measured by using a KO Bostwick consistometer (manufactured by Fukayatekkousyo). At the time of measurement, the apparatus is placed horizontally by using a level, the gate is closed, then the reservoir is filled with a sample having a temperature regulated to 20°C, the trigger is pressed down to open the gate, simultaneously the time is measured, the flow-down distance of the material in the trough after a lapse of 1 second is measured, and thereby the Bostwick consistency can be measured.

Commonly used fillings as cited in Patent Literature 3 and Patent Literature 4 lack fluidity, and thus the numerical value of the Bostwick consistency (measurement temperature 20°C, 1 second) is 0 cm. Moreover, since the applications of the fillings are stuffing bread and sandwiches, the fillings are intended to have a low fluidity and unlikely drip down.

[Second Aspect]

The fine food particle-containing oil/fat composition of the second aspect is a fine food particle-containing oil/fat composition, where at least one dried food selected from the group consisting of a dried vegetable, a dried fruit and a dried alga is subjected to a particle size reduction processing in the presence of an oil/fat, and the fine food particle-containing oil/fat composition has:

(1) a fine food particle content of 2% by mass or more and 98% by mass or less,
(2) a total oil/fat proportion of 10% by mass or more and 98% by mass or less,
(3) a modal diameter in an ultrasonicated state of 0.3 $\mu$m or more and 200 $\mu$m or less, and
(4) a water content of less than 20% by mass.

As a result of having conducted extensive research on a method for producing the fine food particle-containing oil/fat composition of the first aspect, the present inventors found that by subjecting the food-containing oil/fat to a particle size reduction processing until a size equal to or less than a specific size is attained in the oil/fat, various useful and remarkable effects which have not been known to those skilled in the art are exerted. That is, according to the invention of the second aspect, a fine food particle-containing oil/fat composition having industrially superior qualities such as good storability (enhanced light resistance and enhanced color when stored) and dispersibility (oil/fat separation when left to stand) can be provided.

Details of the vegetables, the fruits, and the algae used in the second aspect (such as kinds, components, processings, compositions, features, and production methods) are the same as those described in the first aspect. In particular, the use of at least one selected from the group consisting of a dried vegetable, a dried fruit and a dried alga as a food material causes the particle size reduction processing in the oil/fat to be smoothly performed, and the particle size reduction processing in the oil/fat performed by using a pre-dried food material causes various preferable properties to be exerted such as extended taste extension, lowered water activity, enhanced smoothness, and an increased water absorption index, which are thus more preferable. As for the dried food, the water activity of the food (food material) is preferably 0.97 or less from the viewpoint that the oil/fat consistency is likely exerted when water is added and that the applicability of the composition is expanded, more preferably 0.95 or less, more preferably 0.9 or less, more preferably 0.8 or less, and even more preferably 0.65 or less.

A food material having a low lipid content is preferable because the particle size reduction processing in the oil/fat is smoothly performed. Specifically, the food material used in the present invention is preferably a food material having an oil/fat content of 50% by mass or less, more preferably a food material having an oil/fat content of 40% by mass or less, even more preferably a food material having an oil/fat content of 30% by mass or less, and even more preferably a food material having an oil/fat content of 20% by mass or less.

In the composition of the second aspect as well, the oil/fat portion in the composition thereof (for example, oil/fat components which are liberated when centrifuged at 15,000 rpm for 1 minute) preferably has liquid-like fluidity (specifically, a Bostwick consistency at 20°C for 10 seconds in a Bostwick consistometer of 10 cm or more, more preferably 15 cm or more, and even more preferably 28 cm or more). Moreover, when two or more fats and oils including a liquid oil/fat are used, 90% by mass or more of the entirety of the fats and oils is preferably a liquid edible oil/fat, more preferably 92% by mass or more is a liquid oil/fat, more preferably 95% by mass or more is a liquid oil/fat, and most preferably 100% by mass is a liquid oil/fat.

The particle size reduction processing to be performed in the food-containing oil/fat is preferably performed such that the modal diameter of the treated fine food particle-containing oil/fat composition in an ultrasonicated state is regulated to 0.3 $\mu$m or more and 200 $\mu$m or less because, although the reason is not clear, the treated composition exerts properties such as a lowered water activity, an increased water absorption index, a lowered total luminous transmittance and diffuse transmittance in a state of being diluted with water such that the fine food particle content is 0.06% by mass, an increased haze value, lowered possibility of oil/fat separation, and enhanced taste extension. In order for those properties to be exerted, the modal diameter of the treated fine food particle-containing oil/fat composition in an ultrasonicated state is preferably regulated to 200 $\mu$m or less, more preferably regulated to 150 $\mu$m or less, more preferably regulated to 100 $\mu$m or less, even more preferably regulated to 80 $\mu$m or less, even more preferably regulated to 45 $\mu$m or less, even more preferably regulated to 30 $\mu$m or less, even more preferably regulated to 20 $\mu$m or less, and most preferably regulated to 11 $\mu$m or less. The particle size reduction processing is performed such that the modal diameter of the composition is regulated to 0.3 μm or more for production efficiency, 2.8 μm or more for greater efficiency, and 4.6 μm or more for greater efficiency. The definition and the measurement method of the modal diameter are the same as those described in the first aspect.

The particle size reduction processing to be performed in the food-containing oil/fat is preferably performed such that the median diameter of the treated fine food particle-containing oil/fat composition in an ultrasonicated state is regulated to 0.3 μm or more and 150 μm or less because, although the reason is not clear, the treated composition exerts properties such as an enhanced swallowing sensation. In order for those properties to be exerted, the median diameter of the treated fine food particle-containing oil/fat composition in an ultrasonicated state is preferably regulated to 0.3 μm or more and 150 μm or less, more preferably regulated to 135 μm or less, more preferably regulated to 80 μm or less, more preferably regulated to 40 μm or less, even more preferably regulated to 30 μm or less, particularly preferably regulated to 25 μm or less, and most preferably regulated to 16 μm or less. The particle size reduction processing is performed such that the median diameter of the composition is regulated to 0.3 μm or more for production efficiency, 2.5 μm or more for greater efficiency, and 9.0 μm or more for greater efficiency. The definition and the measurement method of the median diameter are the same as those described in the first aspect.

The particle size reduction processing to be performed in the food-containing oil/fat is preferably performed such that the 90% cumulative diameter (d90) of the treated fine food particle-containing oil/fat composition in an ultrasonicated state is regulated to 0.4 μm or more and 360 μm or less because, although the reason is not clear, the treated composition exerts properties such as enhanced light resistance. In order for those properties to be exerted, the 90% cumulative diameter (d90) of the treated fine food particle-containing oil/fat composition in an ultrasonicated state is preferably regulated to 0.4 μm or more and 360 μm or less, more preferably regulated to 220 μm or less, more preferably regulated to 190 μm or less, more preferably regulated to 150 μm or less, even more preferably regulated to 90 μm or less, even more preferably regulated to 45 μm or less, particularly preferably regulated to 35 μm or less, and most preferably regulated to 28 μm or less. The particle size reduction processing is performed such that the 90% cumulative diameter of the composition is regulated to 0.4 μm or more for production efficiency, 5.9 μm or more for greater efficiency, and 11.1 μm or more for greatest efficiency. The definition and the measurement method of the 90% cumulative diameter (d90) are the same as those described in the first aspect.

The fine food particle content in the composition of the second aspect is, as in the first aspect, 2% by mass or more and 98% by mass or less, and a content of less than 2% by mass is not preferable because the composition exerts a greasy taste. A fine food particle content exceeding 98% by mass is not preferable because the composition exerts a "mealy" texture, which makes it difficult to consume the composition. Concerning the composition of the second aspect, in order for a large amount of fine food particles not to exert neither a "mealy" texture nor a greasy taste in the mouth and to facilitate consumption, the fine food particle content is preferably 2% by mass or more, more preferably 8% by mass or more, even more preferably 15% by mass or more, and most preferably 30% by mass or more. From the view point of the "mealy" texture in particular, the fine food particle content is preferably 98% by mass or less, more preferably 95% by mass or less, more preferably 85% by mass or less, and most preferably 80% by mass or less. The "mealy" texture refers to the texture of a grainy, unmoistened, dry food.

The particle size reduction processing to be performed in the food-containing oil/fat is preferably performed such that the modal diameter of the treated fine food particle-containing oil/fat composition in an ultrasonicated state and/or the median diameter in an ultrasonicated state are regulated to the aforementioned ranges and also the arithmetic standard deviation thereof is regulated to 1 μm or more and 147 μm or less because the quality of taste presentation of the treated fine food particle-containing oil/fat composition is enhanced and the palatability is enhanced, and the arithmetic standard deviation is more preferably regulated to 135 μm or less, more preferably regulated to 90 μm or less, more preferably regulated to 70 μm or less, even more preferably regulated to 60 μm or less, even more preferably regulated to 31 μm or less, particularly preferably regulated to 15 μm or less, and most preferably regulated to 9.5 μm or less. Moreover, the particle size reduction processing is more preferably performed such that the arithmetic standard deviation of the composition is regulated to 220% or less based on the modal diameter in an ultrasonicated state because the initial taste of the composition is enhanced, more preferably 200% or less, more preferably 150% or less, more preferably 110% or less, and most preferably 70% or less.

The particle size reduction processing is performed such that the arithmetic standard deviation of the composition is regulated to 1 μm or more for production efficiency, 1.8 μm or more for greater efficiency, and 5.0 μm or more for greater efficiency.

In the second aspect, it is preferable for production that in the food-containing oil/fat on which a particle size reduction processing is performed, the fine food particle content is regulated to 2% by mass to 98% by mass by configuring the total content of the at least one food (food material) selected from the group consisting of a vegetable, a fruit and an alga to be 2% by mass or more and 90% by mass or less, the total oil/fat proportion is regulated to 10% by mass or more and 98% by mass or less by configuring the oil/fat content to be 10% by mass or more and 98% by mass or less, and the water content is regulated to less than 20% by mass.

The oil/fat used in the second aspect is the same as the oil/fat described in the first aspect. The total oil/fat proportion of the composition of the second aspect is usually 10% by mass or more, and, in particular, 10% by mass or more, furthermore 15% by mass or more, particularly 20% by mass or more, and especially 30% by mass or more are preferable. When it is below the lower limit, the amount of oil/fat is excessively small, and fine food particles may be not sufficiently dispersed in the oil/fat. Meanwhile, the total oil/fat proportion of the composition of the second aspect is usually 98% by mass or less, and, in particular, 98% by mass or less, furthermore 95% by mass or less, particularly 90% by mass or less, and especially 81% by mass or less are preferable. When the total oil/fat proportion exceeds the upper limit, the composition may become highly greasy, thus making it difficult to consume the composition.

The food-containing oil/fat used in the second aspect may contain water, but since water causes lumps in the oil/fat and makes it difficult to perform a particle size reduction processing, the water content in the food-containing oil/fat is desirably less than 20% by mass, more desirably less than 15% by mass, more desirably 10% by mass or less, and more desirably 6% by mass or less. The method for measuring water is the same as the method described in the first aspect.

The water activity of the final composition is lowered by performing the particle size reduction processing of the second aspect in the food-containing oil/fat. With a water activity exceeding 0.97, the final composition is likely discolored during storage, and therefore the water activity of the final composition is preferably regulated to 0.97 or less, more preferably regulated to 0.9 or less, even more preferably regulated to 0.8 or less, even more preferably regulated to 0.65 or less, even more preferably regulated to 0.60 or less, and most preferably regulated to 0.50 or less. The water activity of the final composition is regulated to 0.20 or more for production efficiency, regulated to 0.25 or more for production efficiency, and regulated to 0.30 or more for greater production efficiency.

The means for particle size reduction used in the present invention is not particularly limited, and the same means as what is described in the first aspect can be used. When particle size reduction is performed by any of such means to such an extent that particles having a maximum particle size before ultrasonication of 30 $\mu$m or more (i.e., the maximum particle size observable with the eyes under a microscope) are not contained, the structure of a food material is destroyed, and an undesirable flavor is likely imparted, and when particle size reduction is performed to such an extent that particles having a maximum particle size after ultrasonication of 30 $\mu$m or more are not contained, the structure of a food material is destroyed, and an undesirable flavor is even more likely imparted. Therefore, a method involving particle size reduction performed such that fine food particles having a maximum particle size before ultrasonication of more than 30 $\mu$m are contained is preferable, and a method involving particle size reduction performed such that fine food particles having a maximum particle size after ultrasonication of more than 30 $\mu$m are contained is more preferable. In particular, in the case of using a means of performing particle size reduction in a medium, such as a medium stirring mill or a high-pressure homogenizer, the structure of a food material is destroyed when particle size reduction is performed to such an extent that particles having a maximum particle size before ultrasonication of 30 $\mu$m or more are not contained, and an undesirable flavor is even more likely imparted. Therefore, a method involving particle size reduction performed such that fine food particles having a maximum particle size before ultrasonication of more than 30 $\mu$m are contained is preferable, and a method involving particle size reduction performed such that fine food particles having a maximum particle size after ultrasonication of more than 30 $\mu$m are contained is more preferable. The maximum particle size of the fine food particle-containing oil/fat composition before ultrasonication is preferably 30 $\mu$m or more, more preferably 40 $\mu$m or more, more preferably 50 $\mu$m or more, and most preferably 80 $\mu$m or more.

In particular, a pulverizing method involving a wet bead mill is preferable because it provides a highly stable composition which more unlikely undergoes oil/fat separation when left to stand compared with any other processing method. Although the principle is not clear, this is considered to be because the particle form of fine food particles is favorably changed by the bead mill processing. As for the conditions during the wet bead mill processing, the size and the packing ratio of beads, the outlet mesh size, the feeding rate of an ingredient slurry, mill rotation strength, a method involving a single passage (one pass) or a method involving multiple circulations (circulation type), and the like are suitably selected and regulated according to the size and the properties of a food material and the properties of the intended fine food particle-containing oil/fat composition. In particular, although the principle is not clear, subjecting a powdered food material, the median diameter of which has been regulated to 1,000 $\mu$m or less and 100 $\mu$m or more in advance, to a particle size reduction processing further increases adhesion to a target object, and is more preferable. In producing the composition of the present invention, although the principle is not clear, subjecting an oil/fat where a dried food is contained in the oil/fat in advance to a medium stirring mill processing and, in particular, a wet bead mill processing results in a remarkably increased ease of consumption of a utilized food when the food is eaten together with the fine food particle-containing oil/fat composition and thus is useful.

The consistency (measurement temperature 20°C) of the food-containing oil/fat where a food is contained in an oil/fat before a particle size reduction processing is preferably regulated to 20 Pa·s or less, and regulating it to 8 Pa·s or less further increases the efficiency of a particle size reduction processing and is thus useful. The consistency (measurement temperature 20°C) of the final composition is preferably regulated to 100 mPa·s or more, and by the particle size reduction processing performed such that the consistency is regulated to 500 mPa·s or more, the retentivity in the mouth of the utilized food in the final composition is increased and is thus more preferable.

The particle size reduction processing to be performed in the food-containing oil/fat is performed such that the total luminous transmittance of the treated fine food particle-containing oil/fat composition in a state of being diluted with water so as to have a fine food particle content of 0.06% by mass is preferably regulated to 99% or less because, although the reason is not clear, the treated composition exerts properties such as a vivid external color of the composition, more preferably regulated to 97.7% or less, and most preferably regulated to 97.0% or less. The total luminous transmittance is preferably regulated to 90.0% or more because the external color of the composition appears vividly, and most preferably regulated to 93.0% or more. The total luminous transmittance is a luminous transmittance which takes reflection and scattering in consideration, and the measurement method therefor is the same as the method described in the first aspect.

The particle size reduction processing to be performed in the food-containing oil/fat is performed such that the diffuse transmittance of the treated fine food particle-containing oil/fat composition in a state of being diluted with water so as to have a fine food particle content of 0.06% by mass is preferably regulated to 11% or more because, although the reason is not clear, the treated composition exerts properties such as a more vivid external color of the composition, more preferably regulated to 19% or more, more preferably regulated to 26% or more, more preferably regulated to 30% or more, more preferably regulated to 35% or more, and most preferably regulated to 40% or more. The upper limit of the diffuse transmittance is preferably 60% or less in order for the color of the composition to be a natural color. The diffuse transmittance is the transmittance of diffused light which includes light beams traveling through a sample but does not include components existing in parallel with the incident light, and the measurement method therefor is the same as the method described in the first aspect.

The particle size reduction processing to be performed in the food-containing oil/fat is performed such that the haze value of the treated fine food particle-containing oil/fat composition in a state of being diluted with water so as to have a fine food particle content of 0.06% by mass is preferably regulated to 11% or more because, although the reason is not clear, the external color of the composition appears more vividly, more preferably regulated to 20% or more, more preferably regulated to 26% or more, more preferably regulated to 30% or more, more preferably regulated to 34% or more, and most preferably regulated to 41% or more. The upper limit of the haze value is preferably 70% or less in order for the color of the composition to be a natural color, and is more preferably 60% or less.

Moreover, the particle size reduction processing is preferably a medium stirring mill processing because the color appears more vividly, and a wet bead mill processing is most preferable. Although the reason is not clear, the composition which has undergone particle size reduction may have unmeasurable changes such as a conformational change.

The haze value can be determined by dividing the diffuse transmittance by the total luminous transmittance, and the measurement method therefor is the same as the method described in the first aspect.

The water absorption index is increased by performing the particle size reduction processing in the food-containing oil/fat. The water absorption index of the final composition is preferably regulated to 0.5 or more because the property of exerting consistency when water is added is imparted to the final composition, more preferably regulated to 1.0 or more, more preferably regulated to 2.0 or more, more preferably regulated to 3.0 or more, even more preferably regulated to 3.5 or more, and most preferably regulated to 4.0 or more. From the viewpoint of maintaining a favorable flavor of the oil/fat composition, the water absorption index of the final composition is preferably regulated to 10.0 or less, more preferably regulated to 9.0 or less, and most preferably regulated to 8.0 or less.

The water absorption index is an index for evaluating the water retentivity of the composition. Commonly used oil/fat compositions do not mix with water and thus show a water absorption index of 0 or a very small value. The measurement method therefor is the same as the method described in the first aspect.

Concerning the particle size reduction processing performed in the food-containing oil/fat, the Bostwick consistency (measurement temperature 20°C) of the treated fine food particle-containing oil/fat composition is more preferably 28.0 cm or less in one second, even more preferably 26.0 cm or less, even more preferably 20.0 cm or less, and most preferably 17.0 cm or less. From the viewpoint of taste, the Bostwick consistency (measurement temperature 20°C) is preferably 0.1 cm or more in one second, more preferably 1.0 cm or more, and preferably 2.0 cm or more. The Bostwick consistency can be measured by the same method as the method described in the first aspect.

In the second aspect, as long as the compositional requirements thereof are satisfied, various foods and food additives used in conventional foods may be used as necessary, and examples thereof are the same as those described in the first aspect.

In addition, concerning the components, compositions, production methods, physical properties, characteristics, effects and the like of the composition of the second aspect, the description of the first aspect is entirely applicable unless specified otherwise.

[Applications of Compositions of First and Second Aspects]

The fine food particle-containing oil/fat compositions of the first and second aspects described above (sometimes collectively referred to as the "composition of the present invention") can be preferably used as ingredients and materials of foods and drinks or of liquid condiments. That is, the present invention encompasses foods and drinks as well as liquid condiments containing the fine food particle-containing oil/fat composition of the present invention. By using the composition of the present invention as a part of the ingredients, condiments having high dispersion stability can be produced, such as sauce, dip, mayonnaise, dressing, butter, and jam. It is desirable that the amount of the composition added to a condiment is roughly about 0.001 to 50% by mass. During production, the composition may be added to the condiment at any time. Specifically, the composition may be added to the condiment, the particle size reduction processing may be performed after the ingredients (food materials) of the composition are added to the ingredients of the condiment, or such methods may be combined. The method involving adding the composition to the condiment is industrially convenient and is thus preferable.

The composition of the present invention, as long as the compositional requirements thereof are satisfied, may contain various foods and food additives used in conventional foods as necessary. Examples include water, soy sauce, miso, vinegar, table salt, alcohols, amino acids, sugars (such as glucose, sucrose, fructose, high-fructose corn syrup having a fructose content of less than 50%, and high-fructose corn syrup having a fructose content of 50% or more), sugar alcohols (such as xylitol, erythritol, and maltitol), artificial sweeteners (such as sucralose, aspartame, saccharin, and acesulfame K), minerals (such as calcium, potassium, sodium, iron, zinc, magnesium, and salts thereof), emulsifiers (such as glycerin fatty acid ester, acetic acid monoglyceride, lactic acid monoglyceride, citric acid monoglyceride, diacetyl tartaric acid monoglyceride, succinic acid monoglyceride, polyglycerin fatty acid ester, polyglycerin condensed ricinoleic acid ester, quillaja extracts, soy saponin, tea seed saponin, sucrose fatty acid ester, plant lecithin, and egg yolk lecithin), flavorings, pH adjusters (such as sodium hydroxide, potassium hydroxide, lactic acid, citric acid, tartaric acid, malic acid, and acetic acid), cyclodextrins, antioxidants (such as vitamin E, vitamin C, tea extracts, raw coffee bean extracts, chlorogenic acid, spice extracts, caffeic acid, rosemary extracts, vitamin C palmitate, rutin, quercetin, wax myrtle extracts, and sesame extracts), and all food additives listed in the Pocketbook of Food Additive Labelling (2016 edition).

Moreover, due to recent increasing awareness of natural food orientation, it is desired not to add emulsifiers as so-called food additives and/or colorants as food additives and/or thickening stabilizers as food additives (such as those listed as "colorants", "thickening stabilizers", and "emulsifiers" in the "List of Food Additive Substance Names for Labelling" in the Pocketbook of Food Additive Labelling (2011 edition)), and it is particularly preferable not to add an emulsifier as a food additive because the taste of a material is more likely felt. Moreover, it is most preferable not to contain food additives (such as substances which are listed in the "List of Food Additive Substance Names for Labelling" in the Pocketbook of Food Additive Labelling (2016 edition) and used in food additive applications). Further, because the sweetness of a material itself becomes unlikely to be felt, sugars (such as glucose, sucrose, fructose, high-fructose corn syrup having a fructose content of less than 50%, and high-fructose corn syrup having a fructose content of 50% or more) other than those contained in the material are preferably not used.

That is, the present invention includes the following embodiments:

[1] An embodiment where a food additive preparation is not contained, and
[2] An embodiment where an emulsifier as a food additive preparation is not contained

[Embodiments Derived from First and Second Aspects]

The following embodiments can also be referred to as embodiments derived from the first and second aspects of the present invention described above.

In the embodiments of the present invention including the following derivative embodiments, the oil/fat content in the food-containing oil/fat refers to the weight ratio of the total weight of the externally added oil/fat added to the food-containing oil/fat (i.e., indicating the weight of the oil/fat, which will be added during preparation of the food-containing oil/fat, before being introduced into the food-containing oil/fat) to the food-containing oil/fat. The oil/fat content in the food-containing oil/fat is 10% by mass or more and 98% by mass or less. When the content is less than 10% by mass, the amount of the oil/fat is excessively small, and fine food particles after the processing are not sufficiently dispersed in the oil/fat. Therefore, the oil/fat content in the food-containing oil/fat is preferably 10% by mass or more, more preferably 15% by mass or more, more preferably 20% by mass or more, and most preferably 30% by mass or more. When the oil/fat content in the food-containing oil/fat exceeds 98% by mass, the final composition exerts a strongly greasy taste, which makes it difficult to consume the composition. Therefore, the oil/fat content in the food-containing oil/fat is preferably 98% by mass or less, more preferably 95% by mass or less, even more preferably 90% by mass or less, and most preferably 80% by mass or less.

In the embodiments of the present invention including the following derivative embodiments, the total content of the foods (food materials) in the food-containing oil/fat refers to the weight ratio of the total mass of the foods used in the food-containing oil/fat (i.e., indicating the weight of the food materials, which will be used during preparation of the food-containing oil/fat, before being introduced into the food-containing oil/fat) to the food-containing oil/fat. The total content of the foods (food materials) in the food-containing oil/fat is 2% by mass or more and 90% by mass or less. A content of less than 2% by mass is not preferable because the final composition exerts a greasy taste. A total content of the foods (food materials) in the food-containing oil/fat exceeding 90% by mass is not preferable because the final composition exerts a "mealy" texture, which makes it difficult to consume the composition. In order for the final composition not to exert neither a "mealy" texture nor a greasy taste in the mouth and to facilitate consumption, the total content of the foods (food materials) in the food-containing oil/fat is preferably 2% by mass or more, more preferably 5% by mass or more, even more preferably 10% by mass or more, particularly preferably 20% by mass or more, and most preferably 30% by mass or more. From the viewpoint of the "mealy" texture in particular, the total content of the foods (food materials) in the food-containing oil/fat is preferably 90% by mass or less, more preferably 85% by mass or less, more preferably 70% by mass or less, and most preferably 60% by mass or less. The "mealy" texture refers to the grainy, unmoistened, dry texture.

Although the principle is not clear, the composition of the present invention shows the characteristics that the water activity of the composition is lowered by performing a particle size reduction processing, and this tendency is markedly recognized especially when the particle size reduction processing of a food material is performed in the oil/fat.

Accordingly, the present invention includes the following inventions as derivative embodiments focusing on a water activity lowering effect provided by the particle size reduction processing in the method for producing the composition of the present invention.

(1) A method for producing a fine food particle-containing oil/fat composition, the method comprising subjecting a food-containing oil/fat composition having a total content of at least one food selected from the group consisting of a vegetable, a fruit and an alga of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

(2) A method for lowering water activity of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

(3) A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

Although the principle is not clear, the composition of the present invention shows the characteristics that the water absorption index of the composition is increased by performing the particle size reduction processing, and this tendency is markedly recognized especially when the particle size reduction processing of a food material is performed in the oil/fat. Due to this unknown attribute, the properties of not allowing the taste of a food to disappear and the properties of facilitating mixing with the food can be imparted to a food/drink on which the composition of the present invention is used. Due to the above properties, the composition of the present invention can be preferably used especially as a pasta sauce which does not allow the taste of the utilized pasta to disappear or a dip source which easily mixes with a food.

Accordingly, the present invention includes the following inventions as derivative embodiments focusing on a water absorption index increasing effect provided by the particle size reduction processing in the method for producing the composition of the present invention.

(4) A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a water absorption index of the food-containing oil/fat composition after the processing is at least 0.1 higher than the water absorption index before the processing.

(5) A method for increasing a water absorption index of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

(6) A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 μm or more and 200 μm or less, and a water absorption index of the food-containing oil/fat composition after the processing is at least 0.1 higher than the water absorption index before the processing. Although the principle is not clear, the composition of the present invention shows the characteristics that the haze value of the composition is increased by performing a particle size reduction processing, and this tendency is markedly recognized especially when the particle size reduction processing of a food material is performed in the oil/fat. Due to this unknown attribute, a vivid color can be imparted to a food/drink on which the composition of the present invention is used.

Accordingly, the present invention includes the following inventions as derivative embodiments focusing on a haze value increasing effect provided by the particle size reduction processing in the method for producing the composition of the present invention.

(7) A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 μm or more and 200 μm or less, and a haze value of the food-containing oil/fat composition after the processing is at least 1 higher than the haze value before the processing.

(8) A method for increasing a haze value of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

(9) A method for producing a fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 μm or more and 200 μm or less, and a haze value of a food-containing oil/fat after the processing is at least 1 higher than the haze value before the processing.

The fine food particle-containing oil/fat composition of the present invention has a characteristic that the consistency is increased when water in an amount of about 1% to 50% of the amount of water absorbed at the time of measuring the water absorption index is added to the composition. Accordingly, by adding water in any amount within the range of 1% to 50% of the amount of water absorbed at the time of measuring the water absorption index to the composition of the present invention, the consistency of the oil/fat composition can be regulated to the desired range.

Although the principle is not clear, the composition of the present invention shows a characteristic that the taste extension of the composition is enhanced by performing the particle size reduction processing, this tendency is markedly recognized especially when the particle size reduction processing of a food material is performed in the oil/fat, and this tendency is most strongly recognized when a wet bead mill processing is performed. Due to this unknown attribute, the properties of favorable taste extension can be imparted to the composition itself and foods and drinks on which the composition is used. In particular, the composition of the present invention can be preferably used in subtly seasoned foods and drinks such as Japanese foods. Accordingly, the present invention includes the following invention as a derivative embodiment focusing on the taste extension enhancing effect provided by the particle size reduction processing in the method for producing the composition of the present invention.

(10) A method for enhancing taste extension of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

Although the principle is not clear, the composition of the present invention shows a characteristic that the swallowing sensation of the composition is enhanced by performing the particle size reduction processing, this tendency is markedly recognized especially when the particle size reduction processing of a food material is performed in the oil/fat, and this tendency is most strongly recognized when a wet bead mill processing is performed. Due to this unknown attribute, the properties of a good swallowing sensation can be imparted to the composition itself and foods and drinks on which the composition is used. In particular, the composition can be suitably used in foods and drinks intended for elderly people and infants who have low swallowing ability. Accordingly, the present invention includes the following invention as a derivative embodiment focusing on a swallowing sensation enhancing effect provided by the particle size reduction processing in the method for producing the composition of the present invention.

(11) A method for enhancing a swallowing sensation of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

Although the principle is not clear, the composition of the present invention shows the characteristics that the stability such as light resistance and storability of the composition is increased by performing the particle size reduction processing, this tendency is markedly recognized especially when the particle size reduction processing of a food material is performed in the oil/fat, and this tendency is most strongly recognized when a wet bead mill processing is performed. Due to this unknown attribute, the properties of high stability can be imparted to the composition itself and foods and drinks on which the composition is used. In particular, the composition of the present invention can be suitably used in products distributed at normal temperature, such as dry groceries which deteriorate severely. Accordingly, the present invention includes the following invention as a derivative embodiment focusing on a stability enhancing effect provided by the particle size reduction processing in the method for producing the composition of the present invention.

(12) A method for enhancing stability of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

Although the principle is not clear, the composition of the present invention shows the characteristics that the smoothness of the composition is increased by performing the particle size reduction processing, this tendency is markedly recognized especially when the particle size reduction processing of a food material is performed in the oil/fat, and this tendency is most strongly recognized when a wet bead mill processing is performed. Due to this unknown attribute, the properties of a smooth feel on the tongue can be imparted to the composition itself and foods and drinks on which the composition is used. In particular, the composition of the present invention can be suitably used in emulsified liquid condiments such as mayonnaise.

Accordingly, the present invention includes the following invention as a derivative embodiment focusing on a smoothness enhancing effect provided by the particle size reduction processing in the method for producing the composition of the present invention.

(13) A method for increasing smoothness of a dried food-containing oil/fat composition comprising an oil/fat and at least one dried food selected from the group consisting of a dried vegetable, a dried fruit and a dried alga, the method comprising performing a particle size reduction processing on the dried food-containing oil/fat composition.

Although the principle is not clear, the composition of the present invention shows the characteristics that the initial taste of the composition is increased by performing the particle size reduction processing, this tendency is markedly recognized especially when the particle size reduction processing of a food material is performed in the oil/fat, and this tendency is most strongly recognized when a wet bead mill processing is performed. Due to this unknown attribute, the properties of a good initial taste can be imparted to the composition itself and foods and drinks on which the composition is used. In particular, the composition of the present invention can be suitably used to improve the taste quality of acetic acid-containing foods and drinks such as sushi which likely lose their taste over time. Accordingly, the present invention includes the following invention as a derivative embodiment focusing on an initial taste enhancing effect provided by the particle size reduction processing in the method for producing the composition of the present invention.

(14) A method for increasing an initial taste of a dried food-containing oil/fat composition comprising an oil/fat and at least one dried food selected from the group consisting of a dried vegetable, a dried fruit and a dried alga, the method comprising performing a particle size reduction processing on the dried food-containing oil/fat composition.

Various embodiments derived from the first and second aspects have been described above in reference to examples. Concerning the details of their components, compositions, production methods, physical properties, characteristics, effects and the like, the description of the first and second aspects can be entirely applicable.

Examples

The present invention will now be described in more detail below by way of Examples, but the Examples are merely descriptive for the sake of convenience, and the present invention is not limited to the Examples in any sense.

[Method for Preparing Fine Food Particle-Containing Oil/fat Composition Samples]

Fine food particle-containing oil/fat compositions were prepared as follows.

1. Embodiment where "a food material subjected to a specific particle size reduction processing is mixed with an oil/fat"

A particle size reduction processing was performed on 2,000 g of an air-dried product of tomato and 2,000 g of an air-dried product of carrot, which are among vegetables, by an industrial mixer pulverizer (marketed by Osaka Chemical Co., Ltd., trade name "Wonder Crusher WC-3") capable of highly precise pulverization until the modal diameter in an ultrasonicated state was about 100 to 200 µm. Next, the treated products were subjected to a particle size reduction processing by using a dry pulverizer (manufactured by Nisshin Engineering Inc., trade name "Super Jet Mill SJ-500 (denoted as SJ-500 in the tables)"). As a result, fine powders of a tomato and a carrot were obtained.

Details of the processing conditions of jet mill pulverization are as follows.

(Number of pulverization nozzles)

2 for pulverizing carrot
6 for pulverizing tomato

(Amount fed kg/h)

2 kg/h for pulverizing carrot
1 kg/h for pulverizing tomato

(Pressure during jet mill pulverization)

0.75 MPa

Then, 250 g of the fine powders were mixed with 250 g of commercially available olive oil (14% saturated fatty acid, 80% unsaturated fatty acid). The mixture was sufficiently stirred by a spatula until the mixtures appeared substantially uniform, and thus a fine carrot particle-containing oil/fat composition (Example 26) and a fine tomato particle-containing oil/fat composition (Example 40) in a paste form were obtained.

2. Embodiment where "a specific particle size reduction processing is performed on an oil/fat-containing food material"

A particle size reduction processing was performed on 1,000 g of a freeze-dried product of the pulp of avocado, which is one of fruits, by an industrial mixer pulverizer (marketed by Osaka Chemical Co., Ltd., trade name "Wonder Crusher WC-3" (denoted as WC-3 in the tables)) capable of highly precise pulverization until d90 in an ultrasonicated state was about 300 µm or less. As a result, an avocado slurry (food-containing oil/fat) in a paste form was obtained due to the avocado-derived oil/fat (Example 44).

Next, a particle size reduction processing was performed by using a wet bead mill pulverizer (manufactured by Ashizawa Finetech Ltd., trade name "Starmill Labstar Mini LMZ015 (denoted as LMZ015 in the tables)") by introducing 500 g of the avocado slurry at a feeding rate of 45 rpm into a particle size reduction processing chamber which had been filled with zirconia beads having a diameter of 1.0 mm to 80% of the capacity of the processing chamber. As for the conditions of the particle size reduction processing, the mill rotation strength was 2,590 rpm (8 m/sec), and the beads and the particle size reduction-treated slurry were separated, with the mesh size at the treated product outlet being 0.3 µm. The liquid temperature was maintained at 35°C or less by cooling water throughout the processing. After the slurry was introduced, the particle size reduction processing was performed by causing it to pass only once through the particle size reduction processing chamber (one pass), and the particle size reduction processing product was recovered from the outlet port.

A fine avocado particle-containing oil/fat composition in a paste form was obtained by the above particle size reduction processing (avocado: Example 43).

3. Embodiment where "a specific particle size reduction processing is performed on a food-containing oil/fat containing a specific food material in an oil/fat"

A particle size reduction processing was performed on 6,000 g of an air-dried product of carrot, which is one of vegetables, by an industrial mixer pulverizer (marketed by Osaka Chemical Co., Ltd., trade name "Wonder Crusher WC-3" (denoted as WC-3 in the tables)) capable of highly precise pulverization until d90 was about 300 µm or less.

Next, 5,000 g of the particle size reduction processing product was mixed with 5,000 g of commercially available olive oil, the mixture was sufficiently stirred by a spatula until the mixture appeared uniform, and thus a slurry mixture of the particle size reduction processing product and an oil (a food-containing oil/fat having a food (food material) content of 50.0% and an oil/fat content of 50.0%) was prepared (Example 25).

Next, a particle size reduction processing was further performed by using a wet bead mill pulverizer (manufactured by Hiroshima Metal & Machinery Co., Ltd., trade name "Ultra Apex Mill AM-1 (denoted as AM-1 in the tables)") by introducing 5,000 g of the slurry at a slurry feeding rate of 5 L/h into a particle size reduction processing chamber which had been filled with zirconia beads having a diameter of 2.0 mm to 80% of the capacity of the processing chamber. As for the conditions of the particle size reduction processing, the mill rotational strength was 1,900 rpm (6 m/sec), and the beads and the particle size reduction-treated paste were separated, with the cone separator at the treated product outlet being 0.7 mm. The liquid temperature was maintained at 50°C or less by cooling water throughout the processing. After the slurry was introduced, the particle size reduction processing was performed by causing it to pass only once through the particle size reduction processing chamber (one pass), and the particle size reduction processing product was recovered from the outlet port.

Details of particle size reduction processing conditions are as follows.
(Flow rate) 5 L/h
(Circumferential speed) 1,911 rpm (= 6 m/s)
(Media material) Zirconia
(Media amount) 2.96 kg *80% of the capacity of pulverization chamber
(Media diameter) $\varphi$2.0 mm
(Cone separator) 0.7 mm

A fine carrot particle-containing oil/fat composition in a paste form was obtained by the above particle size reduction processing (Example 24).

Concerning an air-dried product of broccoli, an air-dried product of pumpkin, an air-dried product of tomato, and an air-dried product of paprika, which are among vegetables; an air-dried product of shiitake, which is one of vegetables (mushroom); an air-dried product of yuzu citron, which is one of fruits; and an air-dried product of makonbu, which is one of algae, the processing was performed in the same manner as in Examples 24 and 25 except that the food materials were changed, and thus the following samples were obtained.

(Samples treated in the same manner as in Example 24 except that the food materials were changed)

Broccoli: Example 19
Pumpkin: Example 33
Tomato: Example 38
Paprika: Example 41
Yuzu Citron: Example 45
Shiitake: Example 47
Makonbu: Example 49

(Samples treated in the same manner as in Example 25 except that the food materials were changed)

Broccoli: Example 20
Pumpkin: Example 34
Tomato: Example 39
Paprika: Example 42
Yuzu Citron: Example 46
Shiitake: Example 48
Makonbu: Example 50

As for air-dried products of potato, purple sweet potato, garlic, Chinese cabbage, onion, beetroot, zucchini, basil, cabbage, asparagus, and sweet potato as well, the processing was performed in the same manner, and the resulting samples were also evaluated in the same manner. As a result, the same tendency as the aforementioned materials was recognized.

As Comparative Examples, undried raw yuzu citron, raw shiitake, and raw makonbu were subjected to a processing the same as described in Example 25 except that the food materials were changed, and thus Comparative Examples 10 to 12 were obtained.

100 g of an air-dried product of carrot, which is one of vegetables, and 100 g of commercially available olive oil were mixed, and the mixture was subjected to a crush processing by a pulverizer (manufactured by TESCOM Co., Ltd., trade name "Vacuum Mixer TMV1100 (denoted as TMV1100 in the tables)"). The crush processing was performed five consecutive times in a "vacuum mixer" mode, and thus Comparative Example 6 was obtained.

As Comparative Examples, 100 g of undried raw broccoli, 100 g of raw carrot, 100 g of raw tomato, and 100 g of raw paprika were each mixed with 100 g of commercially available olive oil, and the mixture was subjected to a particle size reduction processing by a commonly used household mixer pulverizer (manufactured by TESCOM Co., Ltd., trade name "Vacuum Mixer TMV1100). The particle size reduction processing was performed five consecutive times in a "vacuum mixer" mode, and thus Comparative Example 5 and Comparative Examples 7 to 9 were obtained.

(Preparation of compositions in which fats and oils were changed)

Production was performed under the same conditions as the production methods of Example 24, Example 25, Example 33, and Example 34 of 3. Embodiment where "a specific particle size reduction processing is performed on a food-containing oil/fat containing a specific food material in an oil/fat" except that salad oil (7% saturated fatty acid, 88% unsaturated fatty acid) as an edible oil/fat having a higher proportion of unsaturated fatty acid than saturated fatty acid in the composition as in olive oil was used in place of olive oil as an oil/fat, and thus Example 27, Example 28, Example 35, and Example 36 were obtained, respectively.

(Preparation of compositions on which a particle size reduction processing was performed where the proportions of blended components in a food-containing oil/fat were changed)

Production was performed under the same conditions as the production methods of "Example 24" and "Example 33" of 3. Embodiment where "a specific particle size reduction processing is performed on a food-containing oil/fat containing a specific food material in an oil/fat" except that the food (food material) content and the oil/fat content in a food-containing oil/fat were changed as shown in Table 2, and thus particle size reduced food-containing oil/fat compositions having different fine food particle contents and total oil/fat proportions were obtained (carrot: Comparative Examples 1 and 2 and Examples 1 to 9, pumpkin: Comparative Examples 3 and 4 and Examples 10 to 18).

In addition, production was performed under the same conditions as the production methods of "Example 24" and "Example 33" except that the oil/fat in the food-containing oil/fat was changed to commercially available salad oil, and the food (food material) content and the oil/fat content were changed as shown in Table 7, and thus compositions having different fine food particle contents and total oil/fat proportions were obtained.

(carrot: Example 29, pumpkin: Example 37)

(Preparation of compositions for which the particle size reduction method was changed)

Production was performed under the same conditions as the production methods of "Example 24" and "Example 33" of 3. Embodiment where "a specific particle size reduction processing is performed on a food-containing oil/fat containing a specific food material in an oil/fat" except that the particle size reduction processing method performed on the food-containing oil/fat was changed as in (1) to (3), and thus Examples 21 to 23 and Examples 30 to 32 were obtained. In performing a high-pressure homogenizer processing, a high-pressure homogenization processing at 100 MPa was performed once by using a "PANDA 2K homogenizer (denoted as PANDA 2K in the tables) manufactured by Niro Soavi".

(1) High-pressure homogenizer processing performed on food-containing oil/fat after bead mill processing: Example 21, Example 30
(2) Bead mill processing performed on food-containing oil/fat after high-pressure homogenizer processing: Example 22, Example 31
(3) Only high-pressure homogenizer processing performed on food-containing oil/fat: Example 23, Example 32

4. Measurement of various property values and sensory evaluation

(1) Haze value, diffuse transmittance, total luminous transmittance

The haze value was measured by a conventional method using a turbidity analyzer WA6000T (manufactured by Nippon Denshoku Industries Co., Ltd.) which is based on integrating sphere photoelectric photometry. That is, the dilution ratio was adjusted according to the fine food particle content of an oil/fat composition to prepare a 0.06% by mass diluted solution, and measurement was performed. For example, in the case of a fine food particle-containing oil/fat composition having a fine food particle content of 75%, the weight of a composition corresponding to the fine food particle content of 0.06 g is 0.08 g, and therefore a 0.06% by mass diluted solution was prepared by adding water to 0.08 g of the composition so as to be 100 g in total and sufficiently stirring the mixture. The diffuse transmittance and the total luminous transmittance were measured by placing the prepared 0.06% by weight diluted solution in a quartz cell having an optical path length of 5 mm and using water as a control, and the haze value was calculated by dividing the diffuse transmittance by the total luminous transmittance.

(2) Particle size distribution (maximum particle size (before ultrasonication), modal diameter in ultrasonicated state, 90% cumulative diameter, median diameter, arithmetic standard deviation)

The Microtrac MT3300 EX2 system of MicrotracBEL Corp. was used as a laser diffraction particle size distribution analyzer to measure the particle size distribution of an oil/fat composition. As a solvent during measurement, 95% ethanol (such as Japan Alcohol Trading Co., Ltd., special type of alcohol, traceable 95, 95 degrees, first grade) was used, and as measurement application software, Data Management System version 2 (DMS2, MicrotracBEL Corp.) was used. In the measurement, washing was performed by pressing the washing button on the measurement application software, then the Set Zero button on the software was pressed to set zero, and a sample was directly introduced until falling within an appropriate concentration range in sample loading. As for the maximum particle size, the measurement result of laser diffraction at a flow rate of 60% for a measurement time of 10 seconds after entering an appropriate concentration range was regarded as a measured value (maximum particle size before ultrasonication), and as for the modal diameter, 90% cumulative diameter (d90), median diameter (d50), and arithmetic standard deviation in an ultrasonicated state, after entering an appropriate concentration range, the ultrasonication button on the aforementioned software was pressed to perform ultrasonication at a frequency of 40 kHz at an output of 40 W for 180 seconds, degassing was preformed 3 times, and the measurement results of laser diffraction at a flow rate of 60% for a measurement time of 10 seconds were regarded as measured values (modal diameter, 90% cumulative diameter, median diameter, and arithmetic standard deviation).

As for the measurement conditions, measurement was performed under conditions having distribution indicator: volume, particle refractive index: 1.60, solvent refractive index: 1.36, upper measurement limit ($\mu$m) = 2,000.00 $\mu$m, lower measurement limit ($\mu$m) = 0.021 $\mu$m.

When the particle size distribution was measured for each channel in the present invention, the particle size for each measurement channel provided in Table 1 was used as a standard. The particle frequency % of each channel was determined by measuring for each channel the frequency of particles having a particle size which is equal to or smaller than the particle size specified for each channel and which is larger than the particle size specified for a channel having one larger number (in the largest channel in the measurement range, the particle size at the lower measurement limit) and using the total frequency of all channels within the measurement range as a denominator. Specifically, the particle frequency % in each of the following 132 channels was measured. Concerning the results obtained from the measurement, the particle size of the channel having the largest particle frequency % was regarded as the modal diameter. When a plurality of channels having the same particle frequency % exists, the particle size of the channel having the smallest particle size among them was employed as the modal diameter.

[Table 1]

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 137.000 | 83 | 1.635 | 119 | 0.072 |
| 12 | 767.700 | 48 | 33.930 | 84 | 1.499 | 120 | 0.066 |

(continued)

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

(3) Water activity

As for water activity measurement, about 6 mL of a sample was measured by a conventional method under measurement conditions having 20 degrees $\pm 0.5°C$ using a water activity analyzer (manufactured by Novasina AG, TH-500 AW SPRINT).

(4) Water absorption index

A given weight of a sample was placed in a stirring vessel, pure water at about 25°C was added dropwise at a rate of about 20 mL/min while the sample was stirred (about 120 rpm), and while the state of the stirred sample was observed, and water was added until water was no longer miscible (oil-water separation occurred, and oil droplets formed on the liquid surface). The state where water and the oil/fat were no longer miscible was regarded as an end point, and the water absorption index was determined by the following formula where the total amount of added water was the amount of absorbed water. Measurement was performed at room temperature of about 25°C.

(Expression 3)

$$\text{Water absorption index} = \text{Amount (mL) of absorbed}$$

$$\text{water} / \text{Weight (g) of oil/fat composition}$$

(5) Bostwick consistency

The Bostwick consistency was measured by using a KO Bostwick consistometer (manufactured by Fukayatekkousyo). At the time of measurement, the apparatus was placed horizontally by using a level, the gate was closed, then the reservoir was filled with a sample having a temperature regulated to 20°C, the trigger was pressed down to open the gate, simultaneously the time was measured, the flow-down distance of the material in the trough after a lapse of 1 second was measured.

(6) Taste extension, (7) Swallowing sensation, (8) Palatability, (9) External color, (10) Ease of consumption, (11) Initial taste, (12) Mealy texture, (13) Greasiness

Each sample of the compositions obtained in the Examples and Comparative Examples in an amount of one tablespoon was placed on a cracker ("Levain(R))", manufactured by Yamazaki Biscuits Co., Ltd.) and tasted by a total of 10 trained sensory test examiners to conduct a sensory test for evaluating the external color before eating and the taste during eating. In this sensory test, evaluations were made on 8 items including "taste extension", "swallowing sensation", "palatability", "external color", "ease of consumption", "initial taste", "mealy texture", and "greasiness" on a 5-point scale, with 5 being best. The "taste extension" was evaluated on a 5-point scale of 5: Good taste extension, 4: Slightly good taste extension, 3: Neutral, 2: Slightly poor taste extension, and 1: Poor taste extension. The "swallowing sensation" was evaluated on a 5-point scale of 5: Good taste swallowing sensation, 4: Slightly good swallowing sensation, 3: Neutral, 2: Slightly poor swallowing sensation, and 1: Poor swallowing sensation. The "palatability" was evaluated on a 5-point scale of 5: Good taste, 4: Slightly good taste, 3: Neutral, 2: Slightly poor taste, and 1: Poor taste. The "external color" was evaluated on a 5-point scale of 5: Vivid external color, 4: Slightly vivid external color, 3: Neutral, 2: Slightly unvivid external color, and 1: Unvivid external color. The "ease of consumption" was evaluated on a 5-point scale of 5: Easy to consume, 4: Slightly easy to consume, 3: Neutral, 2: Slightly difficult to consume, and 1: Difficult to consume. The "initial taste" was evaluated on a 5-point scale of 5: Good initial taste, 4: Slightly good initial taste, 3: Neutral, 2: Slightly poor initial taste, and 1: Poor initial taste. The "mealy texture" was evaluated on a 5-point scale of 5: Weak mealy texture, 4: Slightly weak mealy texture, 3: Neutral, 2: Slightly strong mealy texture, and 1: Strong mealy texture. The "greasiness" was evaluated on a 5-point scale of 5: Weak greasiness, 4: Slightly weak greasiness, 3: Neutral, 2: Slightly strong greasiness, and 1: Strong greasiness. Concerning each evaluated item, each examiner made evaluations by selecting a number that most closely represents his evaluation. The summary of the evaluation results was obtained from the arithmetic mean value of the scores provided by a total of 10 persons.

Regarding the training of sensory test examiners, identification training including A) to C) below was performed, and examiners were selected who had particularly superior results, had a product development experience, were knowledgeable about qualities of food such as taste and appearance, and was capable of making absolute evaluations on each sensory test item, and objective sensory tests were performed by a total of 10 examiners.

A) Taste identification test where, concerning 5 tastes (sweetness: taste of sugar, sourness: taste of tartaric acid, savoriness: taste of sodium glutamate, saltiness: taste of sodium chloride, bitterness: taste of caffeine), one aqueous solution having a concentration close to the threshold of each component was prepared, and from a total of 7 samples including two samples of distilled water added, the taste of each sample was precisely identified;
B) Concentration difference identification test where the concentration differences of 5 aqueous table salt solutions and 5 aqueous acetic acid solutions having slightly different concentrations were precisely identified; and
C) 3-Point identification test where the soy sauce of manufacturer B was precisely identified from a total of three samples: two soy sources of manufacturer A and one soy source of manufacturer B.

(14) Light resistance, (15) Color after storage at 40°C for 1 month, (16) Oil/fat separation after being left to stand overnight

The quality of a 50 g sample of each composition obtained in the Examples and placed in a transparent glass bottle was evaluated.
Concerning the "light resistance", the appearance of a sample stored for 14 days at an illuminance of 25,000 lux was evaluated in comparison to a refrigerated sample.

Concerning the "color after storage at 40°C for 1 month", the appearance of a sample stored at 40°C for 30 days was evaluated in comparison to a refrigerated sample. Concerning the "oil/fat separation after being left to stand overnight", a sample was left to stand at normal temperature for about 12 hours, and the state of oil/fat separation of the sample after being left to stand was evaluated in comparison to the state of the sample immediately after production.

In this sensory test, evaluations were made on 3 items including "light resistance", "color after storage at 40°C for 1 month", and "oil/fat separation after being left to stand overnight" by a total of 10 trained sensory test examiners. Concerning the "light resistance" and "color after storage at 40°C for 1 month", each examiner made evaluations by selecting a number that most closely represents his evaluation on a 5-point scale of 5: Little color change, 4: Slightly little color change, 3: Changed but acceptable, 2: Slightly large color change, and 1: Large color change. Concerning the "oil/fat separation after being left to stand overnight", each examiner made evaluations by selecting a number that most closely represents his evaluation on a 5-point scale of 5: Little oil/fat separation after being left to stand overnight, 4: Slightly little oil/fat separation after being left to stand overnight, 3: Separated but acceptable, 2: Slightly large oil/fat separation after being left to stand overnight, and 1: Large oil/fat separation after being left to stand overnight. The summary of the evaluation results was obtained from the arithmetic mean value of the scores provided by a total of 10 persons.

(17) Water content (%), (18) Fine food particle content (%), (19) Total oil/fat proportion (%)

Concerning the "water content (%)", a composition was measured by the method for measuring "water" prescribed in the "Japan Agricultural Standards for Dressings (Semi-Solid Dressings and Emulsified Liquid Dressings)".

Concerning the "fine food particle content (%)" of a composition, the fine food particle content in a composition was measured by causing 100 g of the composition to pass through a 9 mesh (a Tyler mesh), centrifuging the passed fraction at 15,000 rpm for 1 minute to sufficiently remove the separated supernatant, and measuring the weight of foods (vegetables, fruits, and algae) of the present invention in the precipitated fraction. The residues on the mesh when particles were passed through a 9 mesh were sufficiently left to stand, then fine food particles smaller than the 9-mesh openings were caused to sufficiently pass through with a spatula or the like so as not to change the particle size of the composition, and then the passed fraction was obtained.

Concerning the "total oil/fat proportion (%)", a composition was measured by the method for measuring a "oil/fat content" prescribed in the "Japan Agricultural Standards for Dressings".

"%" in the Examples denotes "% by mass" unless specified otherwise. The unit of the numerical values obtained as a result of measurement (total luminous transmittance, haze value, parallel luminous transmittance, diffused transmitted light) by integrating sphere photoelectric photometry in the Examples is "%", and the unit of the numerical values obtained as a result of measurement of the particle size distribution (maximum particle size, modal diameter, 90% cumulative diameter (d90), median diameter (d50), arithmetic standard deviation) is "μm". Concerning the particle size distribution, the maximum particle size is expressed as a value measured before ultrasonication. The modal diameter, 90% cumulative diameter (d90), median diameter (d50), and arithmetic standard deviation are expressed as values measured after ultrasonication (frequency of 40 kHz, output 40 W, 180 seconds).

The obtained results are shown in Table 2 to Table 13.

[Table 2]

| Sample name | Food material processing | | Food-containin oil/fat | | | |
|---|---|---|---|---|---|---|
| | Food material | Food material drying method | Particle size reduction processing | Externally added oil/fat | Food (food material) content (%) | Oil/fat content (%) |
| Comparative Example 1 | Carrot | Air dry | WC-3→AM-1 | Olive oil | 1.0 | 99.0 |
| Example 1 | Carrot | Air dry | WC-3→AM-1 | Olive oil | 2.0 | 98.0 |
| Example 2 | Carrot | Air dry | WC-3→AM-1 | Olive oil | 5.0 | 95.0 |
| Example 3 | Carrot | Air dry | WC-3→AM-1 | Olive oil | 10.0 | 90.0 |
| Example 4 | Carrot | Air dry | WC-3→AM-1 | Olive oil | 20.0 | 80.0 |

(continued)

| Sample name | Food material processing | | Food-containin oil/fat | | | |
| --- | --- | --- | --- | --- | --- | --- |
| | Food material | Food material drying method | Particle size reduction processing | Externally added oil/fat | Food (food material) content (%) | Oil/fat content (%) |
| Example 5 | Carrot | Air dry | WC-3→AM-1 | Olive oil | 30.0 | 70.0 |
| Example 6 | Carrot | Air dry | WC-3→AM-1 | Olive oil | 40.0 | 60.0 |
| Example 7 | Carrot | Air dry | WC-3→AM-1 | Olive oil | 60.0 | 40.0 |
| Example 8 | Carrot | Air dry | WC-3→AM-1 | Olive oil | 70.0 | 30.0 |
| Example 9 | Carrot | Air dry | WC-3→AM-1 | Olive oil | 85.0 | 15.0 |
| Comparative Example 2 | Carrot | Air dry | WC-3→AM-1 | Olive oil | 91.0 | 9.0 |
| Comparative Example 3 | Pumpkin | Air dry | WC-3→AM-1 | Olive oil | 1.0 | 99.0 |
| Example 10 | Pumpkin | Air dry | WC-3→AM-1 | Olive oil | 2.0 | 98.0 |
| Example 11 | Pumpkin | Air dry | WC-3→AM-1 | Olive oil | 5.0 | 95.0 |
| Example 12 | Pumpkin | Air dry | WC-3→AM-1 | Olive oil | 10.0 | 90.0 |
| Example 13 | Pumpkin | Air dry | WC-3→AM-1 | Olive oil | 20.0 | 80.0 |
| Example 14 | Pumpkin | Air dry | WC-3→AM-1 | Olive oil | 30.0 | 70.0 |
| Example 15 | Pumpkin | Air dry | WC-3→AM-1 | Olive oil | 40.0 | 60.0 |
| Example 16 | Pumpkin | Air dry | WC-3→AM-1 | Olive oil | 60.0 | 40.0 |
| Example 17 | Pumpkin | Air dry | WC-3→AM-1 | Olive oil | 70.0 | 30.0 |
| Example 18 | Pumpkin | Air dry | WC-3→AM-1 | Olive oil | 85.0 | 15.0 |
| Comparative Example 4 | Pumpkin | Air dry | WC-3→AM-1 | Olive oil | 91.0 | 9.0 |

[Table 3]

| Sample name | Oil/fat composition | | | Measurement by integrating sphere photoelectric photometry | | | |
|---|---|---|---|---|---|---|---|
| | Water content (%) | Fine food particle content (%) | Total oil/fat proportion (%) | Total luminous transmittance (T.T) | Haze value (Haze) | Parallel luminous transmittance (P.T) | Diffused transmitted light (Dif) |
| Comparative Example 1 | 0.1 | 1.0 | 99.0 | 96.0 | 48.1 | 44.6 | 46.2 |
| Example 1 | 0.2 | 2.0 | 98.0 | 96.0 | 47.9 | 44.9 | 46.0 |
| Example 2 | 0.5 | 8.0 | 95.0 | 96.1 | 47.3 | 45.8 | 45.5 |
| Example 3 | 1.1 | 15.0 | 90.0 | 96.2 | 46.4 | 47.3 | 44.7 |
| Example 4 | 1.8 | 30.0 | 80.0 | 96.4 | 44.6 | 50.2 | 43.0 |
| Example 5 | 2.4 | 40.0 | 70.1 | 96.6 | 42.8 | 53.1 | 41.3 |
| Example 6 | 3.0 | 60.0 | 60.1 | 96.8 | 41.0 | 56.1 | 39.7 |
| Example 7 | 4.4 | 80.0 | 40.1 | 97.1 | 38.3 | 59.9 | 37.2 |
| Example 8 | 4.7 | 85.0 | 30.1 | 97.2 | 37.4 | 60.8 | 36.3 |
| Example 9 | 4.9 | 95.0 | 15.2 | 97.3 | 36.0 | 62.2 | 35.0 |
| Comparative Example 2 | 5.3 | 99.0 | 9.2 | 97.3 | 35.5 | 62.7 | 34.5 |
| Comparative Example 3 | 0.1 | 1.0 | 99.0 | 95.5 | 55.1 | 42.3 | 52.6 |
| Example 10 | 0.2 | 2.0 | 98.0 | 95.5 | 55.0 | 42.4 | 52.5 |
| Example 11 | 0.4 | 8.0 | 95.0 | 95.6 | 54.8 | 42.6 | 52.4 |
| Example 12 | 1.0 | 15.0 | 90.0 | 95.7 | 54.4 | 43.1 | 52.1 |
| Example 13 | 1.5 | 30.0 | 80.1 | 95.9 | 53.7 | 44.0 | 51.5 |
| Example 14 | 2.1 | 40.0 | 70.1 | 96.1 | 53.0 | 44.9 | 50.9 |
| Example 15 | 2.9 | 60.0 | 60.1 | 96.3 | 52.3 | 45.8 | 50.4 |
| Example 16 | 4.1 | 80.0 | 40.2 | 96.6 | 49.9 | 48.4 | 48.2 |
| Example 17 | 4.3 | 85.0 | 30.2 | 96.7 | 48.3 | 50.0 | 46.7 |
| Example 18 | 4.6 | 95.0 | 15.3 | 96.8 | 45.8 | 52.5 | 44.3 |
| Comparative Example 4 | 4.7 | 99.0 | 9.3 | 96.8 | 44.8 | 53.5 | 43.4 |

[Table 4]

| Sample name | Particle size distribution | | | | | Water activity | Water absorption index | Bostwick consistency (cm/1 second) | Physical property |
|---|---|---|---|---|---|---|---|---|---|
| | Modal diameter | 90% Cumulative diameter (d90) | Median diameter (d50) | Arithmetic standard deviation | Arithmetic standard deviation/Modal diameter | | | | |
| Comparative Example 1 | 6.5 | 21.5 | 8.4 | 4.7 | 72% | 0.27 | 0.0 | Greater than 28.0 | Liquid |
| Example 1 | 7.1 | 21.6 | 8.5 | 4.9 | 69% | 0.30 | 0.0 | Greater than 28.0 | Liquid |
| Example 2 | 7.8 | 22.0 | 8.7 | 5.4 | 69% | 0.34 | 0.7 | Greater than 28.0 | Liquid |
| Example 3 | 8.5 | 22.5 | 9.2 | 6.2 | 73% | 0.39 | 0.9 | 27.0 | Paste |
| Example 4 | 9.3 | 23.7 | 10.0 | 7.8 | 84% | 0.40 | 2.7 | 19.0 | Paste |
| Example 5 | 10.1 | 24.9 | 10.8 | 9.4 | 93% | 0.41 | 3.7 | 17.0 | Paste |
| Example 6 | 11.0 | 26.0 | 11.7 | 11.0 | 100% | 0.41 | 4.8 | 15.0 | Paste |
| Example 7 | 12.0 | 36.0 | 13.5 | 15.9 | 133% | 0.46 | 6.8 | 2.0 | Paste |
| Example 8 | 12.0 | 44.7 | 14.4 | 19.3 | 160% | 0.50 | 7.9 | 0.0 | Paste |
| Example 9 | 13.1 | 57.9 | 15.8 | 24.2 | 185% | 0.56 | 9.5 | 0.0 | Paste |
| Comparative Example 2 | 13.1 | 63.2 | 16.4 | 26.2 | 200% | 0.59 | 10.1 | 0.0 | Paste |
| Comparative Example 3 | 8.5 | 20.9 | 9.1 | 5.5 | 65% | 0.28 | 0.0 | Greater than 28.0 | Liquid |
| Example 10 | 8.5 | 21.1 | 9.2 | 5.6 | 66% | 0.30 | 0.0 | Greater than 28.0 | Liquid |
| Example 11 | 9.3 | 21.6 | 9.3 | 5.8 | 63% | 0.31 | 0.6 | Greater than 28.0 | Liquid |
| Example 12 | 10.1 | 22.4 | 9.5 | 6.2 | 62% | 0.33 | 0.8 | 28.0 | Paste |
| Example 13 | 11.0 | 24.1 | 10.0 | 7.0 | 64% | 0.35 | 1.5 | 20.0 | Paste |
| Example 14 | 12.0 | 25.8 | 10.5 | 7.8 | 65% | 0.37 | 2.6 | 18.0 | Paste |

(continued)

| Sample name | Particle size distribution | | | | | Water activity | Water absorption index | Bostwick consistency (cm/1 second) | Physical property |
|---|---|---|---|---|---|---|---|---|---|
| | Modal diameter | 90% Cumulative diameter (d90) | Median diameter (d50) | Arithmetic standard deviation | Arithmetic standard deviation/Modal diameter | | | | |
| Example 15 | 13.1 | 27.5 | 10.9 | 8.6 | 66% | 0.40 | 3.8 | 16.0 | Paste |
| Example 16 | 17.0 | 33.0 | 13.2 | 10.9 | 64% | 0.43 | 5.7 | 2.0 | Paste |
| Example 17 | 18.5 | 36.9 | 15.1 | 12.4 | 67% | 0.44 | 6.4 | 0.0 | Paste |
| Example 18 | 22.0 | 42.7 | 17.9 | 14.6 | 66% | 0.45 | 7.5 | 0.0 | Paste |
| Comparative Example 4 | 26.2 | 45.0 | 19.0 | 15.5 | 59% | 0.46 | 8.0 | 0.0 | Paste |

[Table 5]

| Sample name | Taste extension | Swallowing sensation | Light resistance | Palatability | External color | Color after storage at 40°C for 1 month |
|---|---|---|---|---|---|---|
| Comparative Example 1 | 4.9 | 4.9 | 4.9 | 4.9 | 4.9 | 5.0 |
| Example 1 | 5.0 | 4.9 | 4.8 | 5.0 | 4.8 | 5.0 |
| Example 2 | 4.8 | 4.9 | 5.0 | 4.8 | 5.0 | 4.8 |
| Example 3 | 4.9 | 4.9 | 4.9 | 4.9 | 4.9 | 4.9 |
| Example 4 | 5.0 | 4.9 | 4.8 | 5.0 | 4.8 | 5.0 |
| Example 5 | 4.8 | 4.9 | 5.0 | 4.8 | 5.0 | 4.8 |
| Example 6 | 4.9 | 4.9 | 4.9 | 4.9 | 4.9 | 4.9 |
| Example 7 | 4.8 | 4.9 | 4.5 | 4.3 | 5.0 | 4.8 |
| Example 8 | 4.9 | 4.9 | 4.4 | 4.4 | 4.9 | 4.9 |
| Example 9 | 5.0 | 4.9 | 3.8 | 4.5 | 4.8 | 5.0 |
| Example 2 | 5.0 | 4.4 | 4.0 | 4.3 | 5.0 | 4.3 |
| Comparative Example 3 | 4.8 | 4.8 | 4.9 | 4.9 | 4.9 | 4.9 |
| Example 10 | 4.9 | 4.8 | 5.0 | 5.0 | 4.8 | 5.0 |
| Example 11 | 5.0 | 4.8 | 4.9 | 5.0 | 5.0 | 4.8 |
| Example 12 | 4.8 | 4.8 | 4.8 | 4.8 | 4.9 | 4.9 |
| Example 13 | 4.9 | 4.8 | 5.0 | 4.9 | 5.0 | 5.0 |
| Example 14 | 5.0 | 4.8 | 4.9 | 5.0 | 4.9 | 4.8 |
| Example 15 | 4.8 | 4.8 | 4.8 | 4.8 | 4.8 | 4.9 |
| Example 16 | 5.0 | 4.8 | 4.9 | 5.0 | 4.9 | 5.0 |
| Example 17 | 4.8 | 4.8 | 4.3 | 4.8 | 4.8 | 4.8 |
| Example 18 | 4.4 | 4.3 | 4.5 | 4.9 | 5.0 | 4.9 |
| Example 4 | 4.5 | 4.3 | 3.9 | 4.5 | 4.9 | 5.0 |

[Table 6]

| Sample name | Oil/fat separation after being left to stand overnight | Ease of consumption | Initial taste | "Mealy" texture | Greasiness |
|---|---|---|---|---|---|
| Comparative Example 1 | 1.0 | 3.0 | 4.5 | 5.0 | 1.0 |
| Example 1 | 2.1 | 3.6 | 4.3 | 5.0 | 2.1 |
| Example 2 | 5.0 | 5.0 | 4.4 | 5.0 | 5.0 |
| Example 3 | 4.9 | 4.9 | 4.5 | 5.0 | 5.0 |
| Example 4 | 4.8 | 4.9 | 4.5 | 5.0 | 5.0 |
| Example 5 | 5.0 | 4.9 | 4.3 | 5.0 | 5.0 |
| Example 6 | 4.9 | 4.9 | 3.9 | 5.0 | 5.0 |
| Example 7 | 5.0 | 3.8 | 3.8 | 3.6 | 5.0 |

(continued)

| Sample name | Oil/fat separation after being left to stand overnight | Ease of consumption | Initial taste | "Mealy" texture | Greasiness |
|---|---|---|---|---|---|
| Example 8 | 4.9 | 3.6 | 3.4 | 3.1 | 5.0 |
| Example 9 | 4.8 | 2.8 | 3.5 | 2.1 | 5.0 |
| Example 2 | 5.0 | 2.6 | 2.8 | 1.7 | 5.0 |
| Comparative Example 3 | 1.1 | 3.0 | 4.4 | 5.0 | 1.1 |
| Example 10 | 2.1 | 3.5 | 4.5 | 5.0 | 2.2 |
| Example 11 | 5.0 | 4.9 | 4.3 | 5.0 | 5.0 |
| Example 12 | 4.9 | 4.9 | 4.4 | 5.0 | 5.0 |
| Example 13 | 4.8 | 4.9 | 4.5 | 5.0 | 5.0 |
| Example 14 | 5.0 | 4.9 | 4.3 | 5.0 | 5.0 |
| Example 15 | 4.9 | 4.9 | 4.4 | 5.0 | 5.0 |
| Example 16 | 5.0 | 4.2 | 4.3 | 3.6 | 5.0 |
| Example 17 | 4.9 | 3.6 | 4.4 | 3.1 | 5.0 |
| Example 18 | 5.0 | 3.1 | 4.5 | 2.1 | 5.0 |
| Comparative Example 4 | 4.9 | 2.6 | 4.3 | 1.7 | 5.0 |

[Table 7]

| Sample name | Food material processing | | Food-containing oil/fat | | | | Oil/fat composition | | |
| --- | --- | --- | --- | --- | --- | --- | --- | --- | --- |
| | Food material | Food material drying method | Particle size reduction processing | Externally added oil/fat | Food (food material) content (%) | Oil/fat content (%) | Water content (%) | Fine food particle content (%) | Total oil/fat proportion (%) |
| Example 19 | Broccoli | Air dry | WC-3→AM-1 | Olive oil | 50.0 | 50.0 | 4.5 | 70.0 | 50.3 |
| Example 20 | Broccoli | Air dry | WC-3 | Olive oil | 50.0 | 50.0 | 4.2 | 70.0 | 50.3 |
| Comparative Example 5 | Broccoli | - | TMV1100 | Olive oil | 50.0 | 50.0 | 41.0 | 50.5 | 50.3 |
| Example 21 | Carrot | Air dry | WC-3→AM-1→PANDA2K | Olive oil | 50.0 | 50.0 | 4.2 | 73.7 | 50.1 |
| Example 22 | Carrot | Air dry | WC-3→PANDA2K→AM-1 | Olive oil | 50.0 | 50.0 | 4.4 | 72.0 | 50.1 |
| Example 23 | Carrot | Air dry | WC-3→PANDA2K | Olive oil | 50.0 | 50.0 | 5.0 | 72.6 | 50.1 |
| Example 24 | Carrot | Air dry | WC-3→AM-1 | Olive oil | 50.0 | 50.0 | 3.9 | 74.7 | 50.1 |
| Example 25 | Carrot | Air dry | WC-3 | Olive oil | 50.0 | 50.0 | 4.8 | 74.0 | 50.1 |
| Comparative Example 6 | Carrot | Air dry | TMV1100 | Olive oil | 50.0 | 50.0 | 3.5 | 73.4 | 50.1 |
| Example 26 | Carrot | Air dry | WC-3→SJ-500 | Olive oil | 50.0 | 50.0 | 4.8 | 73.7 | 50.1 |
| Comparative Example 7 | Carrot | - | TMV1100 | Olive oil | 50.0 | 50.0 | 39.9 | 47.1 | 50.1 |
| Example 27 | Carrot | Air dry | WC-3→AM-1 | Salad oil | 50.0 | 50.0 | 5.6 | 74.5 | 50.1 |
| Example 28 | Carrot | Air dry | WC-3 | Salad oil | 50.0 | 50.0 | 4.5 | 74.5 | 50.1 |
| Example 29 | Carrot | Air dry | WC-3→AM-1 | Salad oil | 25.0 | 75.0 | 4.3 | 38.5 | 75.1 |
| Example 30 | Pumpkin | Air dry | WC-3→AM-1→PANDA2K | Olive oil | 50.0 | 50.0 | 4.5 | 76.5 | 50.2 |
| Example 31 | Pumpkin | Air dry | WC-3→PANDA2K→AM-1 | Olive oil | 50.0 | 50.0 | 4.5 | 74.9 | 50.2 |

(continued)

| Sample name | Food material processing | | Particle size reduction processing | Food-containing oil/fat | | | | Oil/fat composition | |
| --- | --- | --- | --- | --- | --- | --- | --- | --- | --- |
| | Food material | Food material drying method | | Externally added oil/fat | Food (food material) content (%) | Oil/fat content (%) | Water content (%) | Fine food particle content (%) | Total oil/fat proportion (%) |
| Example 32 | Pumpkin | Air dry | WC-3→PANDA2K | Olive oil | 50.0 | 50.0 | 4.8 | 77.1 | 50.2 |
| Example 33 | Pumpkin | Air dry | WC-3→AM-1 | Olive oil | 50.0 | 50.0 | 4.5 | 77.5 | 50.2 |
| Example 34 | Pumpkin | Air dry | WC-3 | Olive oil | 50.0 | 50.0 | 5.0 | 77.0 | 50.2 |
| Example 35 | Pumpkin | Air dry | WC-3→AM-1 | Salad oil | 50.0 | 50.0 | 5.3 | 77.5 | 50.2 |
| Example 36 | Pumpkin | Air dry | WC-3 | Salad oil | 50.0 | 50.0 | 5.5 | 77.0 | 50.2 |
| Example 37 | Pumpkin | Air dry | WC-3→AM-1 | Salad oil | 25.0 | 75.0 | 3.5 | 38.2 | 75.1 |

[Table 8]

| Sample name | Measurement by integrating sphere photoelectric photometry | | | | Particle size distribution | | | | | Water activity | Water ab-sorption in-dex | Bostwick consistency | Physical property |
|---|---|---|---|---|---|---|---|---|---|---|---|---|---|
| | Total lumi-nous transmit-tance (T.T) | Haze value (HAZE) | Parallel lumi-nous transmit-tance (P.T) | Diffused transmitted light (Dif) | Modal di-ameter | 90% Cumu-lative diam-eter (d90) | Median diameter (d50) | Arithmetic standard deviation | Arithmetic standard deviation/Mod al diameter | | | (cm/1 second) | |
| Example 19 | 96.9 | 46.3 | 52.0 | 44.9 | 12.0 | 31.0 | 12.4 | 11.8 | 99% | 0.39 | 5.1 | 7.4 | Paste |
| Example 20 | 97.5 | 36.0 | 62.4 | 35.1 | 74.0 | 84.4 | 29.9 | 30.5 | 42% | 0.57 | 3.9 | 8.4 | Paste |
| Comparative Example 5 | 99.3 | 7.9 | 91.4 | 7.9 | 80.7 | 506.6 | 120.5 | 179.5 | 223% | 0.99 | 0.0 | 18.0 | Paste |
| Example 21 | 96.4 | 42.0 | 55.9 | 40.5 | 9.3 | 34.6 | 10.9 | 10.9 | 118% | 0.39 | 6.7 | 4.5 | Paste |
| Example 22 | 96.4 | 43.2 | 54.7 | 41.6 | 10.1 | 27.3 | 10.1 | 8.3 | 83% | 0.39 | 6.9 | 6.8 | Paste |
| Example 23 | 96.8 | 37.7 | 60.4 | 36.5 | 28.5 | 45.7 | 15.1 | 15.8 | 56% | 0.51 | 5.0 | 6.5 | Paste |
| Example 24 | 97.1 | 39.2 | 59.0 | 38.0 | 12.0 | 27.2 | 12.5 | 12.6 | 106% | 0.42 | 5.8 | 8.0 | Paste |
| Example 25 | 97.3 | 34.4 | 63.8 | 33.5 | 13.1 | 63.8 | 16.9 | 26.3 | 202% | 0.48 | 4.8 | 9.0 | Paste |
| Comparative Example 6 | 98.4 | 17.9 | 80.8 | 17.6 | 322.8 | 348.9 | 112.7 | 146.1 | 46% | 0.37 | 2.1 | 9.3 | Paste |
| Example 26 | 96.2 | 50.8 | 47.4 | 48.8 | 7.1 | 11.1 | 6.6 | 2.7 | 39% | 0.31 | 5.0 | 7.7 | Paste |
| Comparative Example 7 | 99.5 | 7.0 | 92.5 | 7.0 | 383.9 | 490.7 | 296.2 | 149.8 | 40% | 0.99 | 0.0 | 17,5 | Paste |
| Example 27 | 96.9 | 32.7 | 65.2 | 31.7 | 10.1 | 37.2 | 10.9 | 11.0 | 109% | 0.40 | 6.2 | 7.8 | Paste |
| Example 28 | 97.7 | 25.7 | 72.6 | 25.1 | 44.0 | 64.9 | 24.0 | 23.2 | 53% | 0.50 | 5.1 | 8.6 | Paste |
| Example 29 | 96.3 | 41.2 | 56.6 | 39.7 | 9.3 | 21.1 | 8.5 | 6.0 | 65% | 0.40 | 3.7 | 18.0 | Paste |
| Example 30 | 96.9 | 47.2 | 51.2 | 45.8 | 4.6 | 25.9 | 9.9 | 8.3 | 180% | 0.36 | 5.8 | 4.0 | Paste |
| Example 31 | 96.1 | 56.2 | 42.1 | 54.0 | 12.0 | 23.1 | 9.7 | 7.5 | 63% | 0.38 | 5.5 | 7.4 | Paste |
| Example 32 | 96.1 | 46.7 | 51.2 | 44.9 | 24.0 | 36.5 | 14.4 | 12.8 | 54% | 0.52 | 4.0 | 6.9 | Paste |
| Example 33 | 96.5 | 51.6 | 46.7 | 49.8 | 14.3 | 29.2 | 11.4 | 9.4 | 66% | 0.42 | 4.9 | 8.0 | Paste |
| Example 34 | 96.9 | 44.3 | 54.0 | 42.9 | 28.5 | 45.7 | 19.4 | 16.1 | 57% | 0.49 | 3.6 | 8.5 | Paste |

EP 3 539 389 A1

(continued)

| Sample name | Measurement by integrating sphere photoelectric photometry | | | | Particle size distribution | | | | | Water activity | Water absorption index | Bostwick consistency (cm/1 second) | Physical property |
|---|---|---|---|---|---|---|---|---|---|---|---|---|---|
| | Total luminous transmittance (T.T) | Haze value (HAZE) | Parallel luminous transmittance (P.T) | Diffused transmitted light (Dif) | Modal diameter | 90% Cumulative diameter (d90) | Median diameter (d50) | Arithmetic standard deviation | Arithmetic standard deviation/Mod al diameter | | | | |
| Example 35 | 96.9 | 47.5 | 50.9 | 46.0 | 14.3 | 31.3 | 11.8 | 10.2 | 72% | 0.39 | 4.8 | 8.2 | Paste |
| Example 36 | 97.2 | 39.9 | 58.5 | 38.8 | 31.1 | 47.8 | 20.5 | 17.0 | 55% | 0.52 | 3.3 | 8.7 | Paste |
| Example 37 | 96.4 | 50.0 | 48.2 | 48.2 | 11.0 | 25.0 | 10.1 | 7.7 | 71% | 0.42 | 2.6 | 18.0 | Paste |

[Table 9]

| Sample name | Taste extension | Swallowing sensation | Light resistance | Palatability | External color | Color after storage at 40°C for 1 month | Oil/fat separation after being left to stand overnight | Ease of consumption | Initial taste | "Mealy" texture | Greasiness |
|---|---|---|---|---|---|---|---|---|---|---|---|
| Example 19 | 4.8 | 4.9 | 5.0 | 4.8 | 5.0 | 4.8 | 5.0 | 4.9 | 4.3 | 5.0 | 5.0 |
| Example 20 | 3.9 | 3.9 | 3.9 | 4.4 | 4.4 | 4.9 | 2.9 | 3.9 | 4.9 | 5.0 | 5.0 |
| Comparative Example 5 | 3.5 | 1.9 | 1.0 | 1.0 | 1.0 | 1.0 | 1.0 | 1.2 | 2.5 | 5.0 | 5.0 |
| Example 21 | 5.0 | 4.9 | 5.0 | 4.8 | 5.0 | 4.8 | 5.0 | 4.9 | 3.8 | 5.0 | 5.0 |
| Example 22 | 4.8 | 4.8 | 4.9 | 4.9 | 4.9 | 4.9 | 4.9 | 4.9 | 4.4 | 5.0 | 5.0 |
| Example 23 | 4.4 | 4.8 | 4.0 | 4.5 | | | 5.0 | 3.8 | 3.9 | 4.5 | 5.0 | 5.0 |
| Exam 24 | 5.0 | 4.8 | 4.9 | 5.0 | 5.0 | 4.8 | 5.0 | 4.9 | 3.8 | 5.0 | 5.0 |
| Example 25 | 4.8 | 4.3 | 3.8 | 4.3 | 4.4 | 4.9 | 2.9 | 3.9 | 2.9 | 5.0 | 5.0 |
| Comparative Example 6 | 1.0 | 1.8 | 1.5 | 1.2 | 2.5 | 5.0 | 1.8 | 1.2 | 5.0 | 5.0 | 5.0 |
| Exam ple 26 | 5.0 | 4.8 | 4.9 | 5.0 | 4.4 | 4.8 | 4.0 | 4.4 | 4.8 | 5.0 | 5.0 |
| Comparative Example 7 | 1.0 | 1.0 | 1.0 | 1.0 | 1.0 | 1.0 | 1.0 | 1.2 | 4.9 | 5.0 | 5.0 |
| Example 27 | 4.9 | 4.8 | 4.5 | 4.9 | 5.0 | 5.0 | 4.8 | 4.4 | 4.0 | 5.0 | 5.0 |
| Example 28 | 4.0 | 4.3 | 3.9 | 4.5 | 3.4 | 5.0 | 3.0 | 3.4 | 4.3 | 5.0 | 5.0 |
| Example 29 | 4.8 | 4.8 | 4.8 | 4.8 | 4.8 | 4.8 | 4.9 | 4.9 | 4.4 | 5.0 | 5.0 |
| Example 30 | 4.9 | 4.8 | 5.0 | 4.9 | 5.0 | 4.9 | 5.0 | 4.9 | 3.5 | 4.1 | 5.0 |
| Example 31 | 5.0 | 4.8 | 4.9 | 5.0 | 4.9 | 5.0 | 4.9 | 4.9 | 4.3 | 5.0 | 5.0 |
| Example 32 | 4.3 | 4.8 | 4.3 | 4.8 | 4.3 | 4.8 | 3.8 | 4.3 | 4.4 | 3.9 | 5.0 |
| Example 33 | 4.9 | 4.8 | 5.0 | 4.9 | 5.0 | 4.9 | 2.9 | 4.8 | 4.5 | 4.0 | 5.0 |
| Example 34 | 4.5 | 4.3 | 3.9 | 4.5 | 4.4 | 5.0 | 2.9 | 3.8 | 4.5 | 3.8 | 5.0 |
| Example 35 | 4.8 | 4.8 | 4.8 | 4.8 | 4.8 | 4.8 | 4.8 | 4.8 | 4.3 | 3.8 | 5.0 |
| Example 36 | 3.9 | 4.3 | 4.0 | 4.4 | 4.5 | 4.9 | 3.0 | 3.8 | 4.4 | 3.8 | 5.0 |

(continued)

| Sample name | Taste extension | Swallowing sensation | Light resistance | Palatability | External color | Color after storage at 40°C for 1 month | Oil/fat separation after being left to stand overnight | Ease of consumption | Initial taste | "Mealy" texture | Greasiness |
|---|---|---|---|---|---|---|---|---|---|---|---|
| Example 37 | 5.0 | 4.8 | 4.9 | 5.0 | 4.9 | 5.0 | 4.9 | 4.8 | 4.5 | 5.0 | 5.0 |

[Table 10]

| Sample name | Food material processing | | | Food-containing oil/fat | | | | Oif/fat composition | | |
|---|---|---|---|---|---|---|---|---|---|---|
| | Food material | Food material drying method | Particle size reduction processing | Externally added oil/fat | Food (food material) content (%) | Oil/fat content (%) | Water content (%) | Fine food particle content (%) | Total oil/fat proportion (%) |
| Example 38 | Tomato | Air dry | WC-3→AM-1 | Olive oil | 50.0 | 50.0 | 5.5 | 65.0 | 50.1 |
| Example 39 | Tomato | Air dry | WC-3 | Olive oil | 50.0 | 50.0 | 5.9 | 65.0 | 50.1 |
| Example 40 | Tomato | Air dry | WC-3→SJ-500 | Olive oil | 50.0 | 50.0 | 4.7 | 65.0 | 50.1 |
| Comparative Example 8 | Tomato | - | TMV1100 | Olive oil | 50.0 | 50.0 | 43.2 | 50.5 | 50.1 |
| Example 41 | Paprika | Air dry | WC-3→AM-1 | Olive oil | 50.0 | 50.0 | 4.4 | 70.0 | 50.1 |
| Example 42 | Paprika | Air dry | WC-3 | Olive oil | 50.0 | 50.0 | 4.3 | 70.0 | 50.1 |
| Comparative Example 9 | Paprika | - | TMV1100 | Olive oil | 50.0 | 50.0 | 45.3 | 49.3 | 50.1 |
| Example 43 | Avocado | Freeze dry | WC-3→LMZ015 | None | 100.0 | 0.0 | 4.9 | 80.0 | 52.5 |
| Example 44 | Avocado | Freeze dry | WC-3 | None | 100.0 | 0.0 | 4.7 | 80.0 | 52.5 |
| Example 45 | Yuzu Citron | Air dry | WC-3→AM-1 | Olive oil | 50.0 | 50.0 | 4.2 | 75.0 | 52.5 |
| Example 46 | Yuzu Citron | Air dry | WC-3 | Olive oil | 50.0 | 50.0 | 4.2 | 75.0 | 52.5 |
| Comparative Example 10 | Yuzu Citron | - | WC-3 | Olive oil | 50.0 | 50.0 | 46.9 | 49.4 | 52.5 |
| Example 47 | Shiitake | Air dry | WC-3→AM-1 | Olive oil | 50.0 | 50.0 | 5.4 | 75.0 | 52.5 |
| Example 48 | Shiitake | Air dry | WC-3 | Olive oil | 50.0 | 50.0 | 5.7 | 75.0 | 52.5 |
| Comparative Example 11 | Shiitake | - | WC-3 | Olive oil | 50.0 | 50.0 | 38.3 | 52.3 | 52.5 |
| Example 49 | Makonbu | Air dry | WC-3→AM-1 | Olive oil | 50.0 | 50.0 | 4.7 | 75.0 | 52.5 |
| Example 50 | Makonbu | Air dry | WC-3 | Olive oil | 50.0 | 50.0 | 4.3 | 75.0 | 52.5 |

(continued)

| Sample name | Food material processing | | | Food-containing oil/fat | | | | Oil/fat composition | | |
| | Food material | Food material drying method | Particle size reduction processing | Externally added oil/fat | Food (food material) content (%) | Oil/fat content (%) | Water content (%) | Fine food particle content (%) | Total oil/fat proportion (%) |
|---|---|---|---|---|---|---|---|---|---|
| Comparative Example 12 | Makonbu | - | WC-3 | Olive oil | 50.0 | 50.0 | 37.8 | 51.0 | 52.5 |

[Table 11]

| Sample name | Measurement by integrating sphere photoelectric photometry | | | | Particle size distribution | | | | | Water activity | Water absorption index | Bostwick consistency (cm/1 second) | Physical property |
|---|---|---|---|---|---|---|---|---|---|---|---|---|---|
| | Total luminous transmittance (T.T) | Haze value (HAZE) | Parallel luminous transmittance (P.T) | Diffused transmitted light (Dif) | Modal diameter | 90% Cumulative diameter (d90) | Median diameter (d50) | Arithmetic standard deviation | Arithmetic standard deviation/Modal diameter | | | | |
| Example 38 | 96.8 | 34.3 | 69.9 | 33.2 | 12.0 | 21.9 | 12.5 | 6.6 | 55% | 0.42 | 7.5 | 7.0 | Paste |
| Example 39 | 97.5 | 20.2 | 77.8 | 19.7 | 74.0 | 151.5 | 71.1 | 52.3 | 71% | 0.48 | 6.5 | 8.0 | Paste |
| Example 40 | 96.6 | 31.8 | 65.9 | 30.7 | 2.8 | 5.9 | 2.5 | 1.8 | 64% | 0.43 | 7.2 | 7.0 | Paste |
| Comparative Example 8 | 98.9 | 12.0 | 87.0 | 11.9 | 456.5 | 576.6 | 102.5 | 222.7 | 49% | 0.98 | 0 | 17.3 | Paste |
| Example 41 | 93.0 | 44.5 | 51.6 | 41.4 | 12.0 | 138.8 | 22.3 | 56.4 | 470% | 0.50 | 6.9 | 7.5 | Paste |
| Example 42 | 93.6 | 37.6 | 58.4 | 35.2 | 191.9 | 344.2 | 132.5 | 133.5 | 70% | 0.55 | 6.0 | 8.1 | Paste |
| Comparative Example 9 | 99.0 | 11.6 | 87.5 | 11.5 | 418.6 | 1469.0 | 517.0 | 366.0 | 88% | 0.98 | 0 | 17.0 | Paste |
| Example 43 | 95.7 | 55.3 | 42.8 | 52.9 | 10.1 | 17.7 | 10.3 | 5.1 | 51% | 0.33 | 7.9 | 6.2 | Paste |
| Example 44 | 96.0 | 48.1 | 49.8 | 46.2 | 13.1 | 208.6 | 29.3 | 86.1 | 659% | 0.49 | 6.5 | 6.9 | Paste |
| Example 45 | 96.5 | 41.9 | 56.1 | 40.4 | 10.1 | 18.9 | 10.8 | 5.5 | 55% | 0.37 | 7.2 | 6.8 | Paste |
| Example 46 | 96.7 | 38.8 | 59.1 | 37.6 | 13.1 | 23.6 | 12.1 | 7.3 | 57% | 0.46 | 6.1 | 7.3 | Paste |
| Comparative Example 10 | 98.2 | 21.4 | 77.2 | 21.0 | 37.0 | 58.8 | 29.9 | 18.1 | 49% | 0.98 | 0.0 | 17.2 | Paste |
| Example 47 | 95.7 | 56.0 | 42.1 | 53.6 | 11.0 | 27.1 | 10.2 | 8.5 | 77% | 0.33 | 7.2 | 6.7 | Paste |
| Example 48 | 96.4 | 37.6 | 60.1 | 36.2 | 44.0 | 102.1 | 30.2 | 35.5 | 81% | 0.45 | 5.9 | 7.3 | Paste |
| Comparative Example 11 | 97.8 | 24.9 | 73.4 | 24.4 | 48.0 | 108.0 | 37.6 | 36.6 | 77% | 0.99 | 0.0 | 17.2 | Paste |
| Example 49 | 97.4 | 34.7 | 63.7 | 33.8 | 26.2 | 48.1 | 21.0 | 15.2 | 58% | 0.39 | 8.0 | 6.5 | Paste |
| Example 50 | 97.6 | 28.8 | 69.5 | 28.1 | 33.9 | 56.0 | 27.9 | 17.4 | 52% | 0.47 | 7.0 | 7.4 | Paste |
| Comparative Example 12 | 98.0 | 21.0 | 77.4 | 20.6 | 37.0 | 54.2 | 26.6 | 17.2 | 47% | 0.98 | 0.0 | 16.9 | Paste |

[Table 12]

| Sample name | Taste extension | Swallowing sensation | Light resistance | Palatability | External color | Color after storage at 40°C for 1 month | Oil/fat separation after being left to stand overnight | Ease of consumption | Initial taste | " Mealy" texture | Greasiness |
|---|---|---|---|---|---|---|---|---|---|---|---|
| Example 38 | 4.8 | 4.8 | 4.8 | 4.8 | 4.8 | 4.8 | 4.8 | 4.8 | 4.3 | 5.0 | 5.0 |
| Example 39 | 3.9 | 2.8 | 3.0 | 3.9 | 3.5 | 4.9 | 3.0 | 2.8 | 4.4 | 5.0 | 5.0 |
| Example 40 | 5.0 | 4.8 | 4.9 | 5.0 | 4.4 | 5.0 | 3.9 | 4.3 | 4.5 | 5.0 | 5.0 |
| Comparative Example 8 | 1.0 | 1.8 | 1.0 | 1.0 | 2.3 | 1.0 | 1.0 | 1.1 | 4.8 | 5.0 | 5.0 |
| Example 41 | 4.9 | 4.3 | 3.0 | 3.9 | 5.0 | 4.9 | 5.0 | 2.8 | 1.0 | 5.0 | 5.0 |
| Example 42 | 1.5 | 1.8 | 1.4 | 2.0 | 4.4 | 5.0 | 2.9 | 1.3 | 4.5 | 5.0 | 5.0 |
| Comparative Example 9 | 1.0 | 1.0 | 1.0 | 1.0 | 2.3 | 1.0 | 1.0 | 1.1 | 4.3 | 5.0 | 5.0 |
| Exam le 43 | 5.0 | 4.8 | 4.9 | 5.0 | 4.9 | 5.0 | 4.9 | 4.8 | 4.5 | 3.6 | 3.6 5.0 |
| Example 44 | 4.8 | 3.8 | 1.8 | 2.8 | 4.3 | 4.8 | 2.8 | 1.8 | 1.0 | 3.7 | 5.0 |
| Example 45 | 4.9 | 4.8 | 5.0 | 4.9 | 5.0 | 4.9 | 5.0 | 4.8 | 4.4 | 4.0 | 5.0 |
| Example 46 | 5.0 | 4.8 | 4.9 | 5.0 | 4.4 | 5.0 | 2.9 | 4.3 | 4.5 | 4.1 | 5.0 |
| Comparative Example 10 3.8 | 3.8 | 3.8 | 3.8 | 4.3 | 3.3 | 1.0 | 1.0 | 1.1 | 4.8 | 5.0 | 5.0 |
| Example 47 | 4.9 | 4.8 | 5.0 | 4.9 | 5.0 | 4.9 | 5.0 | 4.8 | 4.4 | 4.0 | 5.0 |
| Exam le 48 | 4.0 | 3.3 | 2.9 | 4.0 | 4.4 | 5.0 | 2.9 | 2.8 | 4.5 | 4.1 | 5.0 |
| Comparative Example 11 | 3.8 | 3.3 | 2.8 | 3.8 | 3.3 | 1.0 | 1.0 | 1.1 | 4.3 | 5.0 | 5.0 |
| Exam le 49 | 4.4 | 4.3 | 4.0 | 4.4 | 5.0 | 4.9 | 5.0 | 3.8 | 4.4 | 4.0 | 5.0 |
| Example 50 | 4.0 | 3.8 | 3.9 | 4.5 | 3.4 | 5.0 | 2.9 | 3.3 | 4.5 | 4.1 | 5.0 |
| Comparative Example 12 | 3.8 | 3.8 | 3.8 | 4.3 | 3.3 | 1.0 | 1.0 | 1.1 | 4.8 | 5.0 | 5.0 |

EP 3 539 389 A1

[Table 13]

| | Maximum particle size before ultrasonication (μm) | | Maximum particle size before ultrasonication (μm) |
|---|---|---|---|
| Comparative Example 1 | 26.2 | Example 26 | 88.0 |
| Example 1 | 28.5 | Comparative Example 7 | 1184.0 |
| Example 2 | 28.5 | Example 27 | 296.0 |
| Example 3 | 31.1 | Example 28 | 322.8 |
| Example 4 | 114.1 | Example 29 | 271.4 |
| Example 5 | 191.9 | Example 30 | 248.9 |
| Example 6 | 228.2 | Example 31 | 209.3 |
| Example 7 | 322.8 | Example 32 | 209.3 |
| Example 8 | 418.6 | Example 33 | 209.3 |
| Example 9 | 592.0 | Example 34 | 352.0 |
| Comparative Example 2 | 837.2 | Example 35 | 209.3 |
| Comparative Example 3 | 26.2 | Example 36 | 296.0 |
| Example 10 | 28.5 | Example 37 | 271.4 |
| Example 11 | 28.5 | Example 38 | 228.2 |
| Example 12 | 33.9 | Example 39 | 322.8 |
| Example 13 | 114.1 | Example 40 | 44.0 |
| Example 14 | 176.0 | Comparative Example 8 | 704.0 |
| Example 15 | 191.9 | Example 41 | 456.5 |
| Example 16 | 249.3 | Example 42 | 913.0 |
| Example 17 | 296 | Comparative Example 9 | 2000.0 |
| Example 18 | 352.0 | Example 43 | 148.0 |
| Comparative Example 4 | 114.1497.8 | Example 44 | 248.9 |
| Example 19 | 248.9 | Example 45 | 135.7 |
| Example 20 | 296.0 | Example 46 | 161.4 |
| Comparative Example 5 | 1408.0 | Comparative Example 10 | 352.0 |
| Example 21 | 248.9 | Example 47 | 209.3 |
| Example 22 | 209.3 | Example 48 | 418.6 |
| Example 23 | 296.0 | Comparative Example 11 | 456.5 |
| Example 24 | 271.4 | Example 49 | 352.0 |
| Example 25 | 1184.0 | Example 50 | 352.0 |

(continued)

| | Maximum particle size before ultrasonication (μm) | | Maximum particle size before ultrasonication (μm) |
|---|---|---|---|
| Comparative Example 6 | 2000.0 | Comparative Example 12 | 296.0 |

**Claims**

1. A fine food particle-containing oil/fat composition comprising:

   fine particles of at least one food selected from the group consisting of a vegetable, a fruit and an alga; and an oil/fat,

   and having:

   (1) a fine food particle content of 2% by mass or more and 98% by mass or less,
   (2) a total oil/fat proportion of 10% by mass or more and 98% by mass or less,
   (3) a modal diameter in an ultrasonicated state of 0.3 μm or more and 200 μm or less, and
   (4) a water content of less than 20% by mass.

2. The fine food particle-containing oil/fat composition according to claim 1, having a maximum particle size of 30 μm or more before ultrasonication.

3. The fine food particle-containing oil/fat composition according to claim 1 or 2, having a consistency of 0.1 cm or more and 28 cm or less as measured at 20°C for 1 second by using a Bostwick consistometer.

4. The fine food particle-containing oil/fat composition according to any one of claims 1 to 3, having a fine food particle content of 15% by mass or more.

5. The fine food particle-containing oil/fat composition according to any one of claims 1 to 4, wherein an oil/fat portion of the composition has a Bostwick consistency of 10 cm or more as measured at 20°C for 10 seconds by using a Bostwick consistometer.

6. The fine food particle-containing oil/fat composition according to any one of claims 1 to 5, wherein two or more fats and oils including a liquid oil/fat are used, and 90% by mass or more of an entirety of the fats and oils is a liquid edible oil/fat.

7. The fine food particle-containing oil/fat composition according to any one of claims 1 to 6, wherein a total mass of the vegetables, the fruits, and the algae accounts for 30% by mass or more of a total mass of insoluble components in the composition.

8. The fine food particle-containing oil/fat composition according to any one of claims 1 to 7, wherein the fine food particles are fine particles of a food having an oil/fat content of 50% by mass or less.

9. The fine food particle-containing oil/fat composition according to any one of claims 1 to 8, having a total luminous transmittance of 99% or less when diluted to a fine food particle content of 0.06% by mass.

10. The fine food particle-containing oil/fat composition according to any one of claims 1 to 9, having a haze value of 11% to 70% when diluted to a fine food particle content of 0.06% by mass.

11. The fine food particle-containing oil/fat composition according to any one of claims 1 to 10, having a diffuse transmittance of 11% or more when diluted to a fine food particle content of 0.06% by mass.

12. The fine food particle-containing oil/fat composition according to any one of claims 1 to 11, having a water activity of 0.97 or less.

13. The fine food particle-containing oil/fat composition according to any one of claims 1 to 12, having a water absorption index of 0.5 or more and 10 or less.

14. The fine food particle-containing oil/fat composition according to any one of claims 1 to 13, having a 50% cumulative diameter (median diameter) in an ultrasonicated state of 0.3 $\mu$m or more and 150 $\mu$m or less.

15. The fine food particle-containing oil/fat composition according to any one of claims 1 to 14, having a consistency of 1.0 cm or more and 28 cm or less as measured at 20°C for 1 second by using a Bostwick consistometer.

16. A food/drink comprising the fine food particle-containing oil/fat composition according to any one of claims 1 to 15.

17. A liquid condiment comprising the fine food particle-containing oil/fat composition according to any one of claims 1 to 15.

18. A method for producing the fine food particle-containing oil/fat composition according to any one of claims 1 to 15, the method comprising blending an oil/fat with dried fine food particles of at least one selected from the group consisting of a dried vegetable, a dried fruit and a dried alga.

19. A method for producing the fine food particle-containing oil/fat composition according to any one of claims 1 to 15, the method comprising subjecting a dried food of at least one selected from the group consisting of a dried vegetable, a dried fruit and a dried alga to a pulverization processing in the presence of an oil/fat.

20. The method according to claim 19, wherein the pulverization processing is a medium stirring mill pulverization processing.

21. A fine food particle-containing oil/fat composition, wherein at least one dried food selected from the group consisting of a dried vegetable, a dried fruit and a dried alga is subjected to a particle size reduction processing in the presence of an oil/fat, and the fine food particle-containing oil/fat composition has:

    (1) a fine food particle content of 2% by mass or more and 98% by mass or less,
    (2) a total oil/fat proportion of 10% by mass or more and 98% by mass or less,
    (3) a modal diameter in an ultrasonicated state of 0.3 $\mu$m or more and 200 $\mu$m or less, and
    (4) a water content of less than 20% by mass.

22. The fine food particle-containing oil/fat composition according to claim 21, having a maximum particle size of 30 $\mu$m or more before ultrasonication.

23. The fine food particle-containing oil/fat composition according to claim 21 or 22, having a consistency of 0.1 cm or more and 28 cm or less as measured at 20°C for 1 second by using a Bostwick consistometer.

24. The fine food particle-containing oil/fat composition according to any one of claims 21 to 23, having a fine food particle content of 15% by mass or more.

25. The fine food particle-containing oil/fat composition according to any one of claims 21 to 24, wherein an oil/fat portion of the composition has a Bostwick consistency of 10 cm or more as measured at 20°C for 10 seconds by using a Bostwick consistometer.

26. The fine food particle-containing oil/fat composition according to any one of claims 21 to 25, wherein two or more fats and oils including a liquid oil/fat are used, and 90% by mass or more of an entirety of the fats and oils is a liquid edible oil/fat.

27. The fine food particle-containing oil/fat composition according to any one of claims 21 to 26, wherein a total weight of the vegetables, the fruits, and the algae accounts for 30% by mass or more of a total weight of insoluble components in the composition.

28. The fine food particle-containing oil/fat composition according to any one of claims 21 to 27, wherein the fine food particles are fine particles of a food having an oil/fat content of 50% by mass or less.

**29.** The fine food particle-containing oil/fat composition according to any one of claims 21 to 28, having a total luminous transmittance of 99% or less when diluted to a fine food particle content of 0.06% by mass.

**30.** The fine food particle-containing oil/fat composition according to any one of claims 21 to 29, having a haze value of 11% to 70% when diluted to a fine food particle content of 0.06% by mass.

**31.** The fine food particle-containing oil/fat composition according to any one of claims 21 to 30, having a diffuse transmittance of 11% or more when diluted to a fine food particle content of 0.06% by mass.

**32.** The fine food particle-containing oil/fat composition according to any one of claims 21 to 31, having a water activity of 0.97 or less.

**33.** The fine food particle-containing oil/fat composition according to any one of claims 21 to 32, having a water absorption index of 0.5 or more and 10 or less.

**34.** The fine food particle-containing oil/fat composition according to any one of claims 21 to 33, having a 50% cumulative diameter (median diameter) in an ultrasonicated state of 0.3 $\mu$m or more and 150 $\mu$m or less.

**35.** The fine food particle-containing oil/fat composition according to any one of claims 21 to 34, having a consistency of 1.0 cm or more and 28 cm or less as measured at 20°C for 1 second by using a Bostwick consistometer.

**36.** A food/drink comprising the fine food particle-containing oil/fat composition according to any one of claims 21 to 34.

**37.** A liquid condiment comprising the fine food particle-containing oil/fat composition according to any one of claims 21 to 34.

**38.** A method for producing a fine food particle-containing oil/fat composition, the method comprising subjecting a food-containing oil/fat composition having a total content of at least one food selected from the group consisting of a vegetable, a fruit and an alga of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

**39.** A method for lowering water activity of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**40.** A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and water activity of the food-containing oil/fat composition after the processing is at least 0.01 lower than the water activity before the processing.

**41.** A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a water absorption index of the food-containing oil/fat composition after the processing is at least 0.1 higher than the water absorption index before the processing.

**42.** A method for increasing a water absorption index of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**43.** A fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a water absorption index of the food-containing oil/fat composition after the processing is at least 0.1 higher than the water absorption index before the processing.

**44.** A method for producing a fine food particle-containing oil/fat composition comprising an oil/fat and fine particles of at least one food selected from the group consisting of a vegetable, a fruit and an alga, the method comprising subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a haze value of the food-containing oil/fat composition after the processing is at least 1 higher than the haze value before the processing.

**45.** A method for increasing a haze value of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**46.** A method for producing a fine food particle-containing oil/fat composition comprising an oil/fat and fine particles of at least one food selected from the group consisting of a vegetable, a fruit and an alga, wherein the fine food particle-containing oil/fat composition is obtained by subjecting a food-containing oil/fat composition having a total food content of 2% by mass or more and 90% by mass or less, an oil/fat content of 10% by mass or more and 98% by mass or less, and a water content of less than 20% by mass to a particle size reduction processing until a modal diameter in an ultrasonicated state is 0.3 $\mu$m or more and 200 $\mu$m or less, and a haze value of a food-containing oil/fat composition after the processing is at least 1 higher than the haze value before the processing.

**47.** A method for enhancing taste extension of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**48.** A method for enhancing a swallowing sensation of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**49.** A method for enhancing stability of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**50.** A method for improving smoothness of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

**51.** A method for improving an initial taste of a dried food-containing oil/fat composition comprising an oil/fat and at least one dried food selected from the group consisting of a dried vegetable, a dried fruit and a dried alga, the method comprising subjecting the dried food-containing oil/fat composition to a particle size reduction processing.

## INTERNATIONAL SEARCH REPORT

| International application No. |
| --- |
| PCT/JP2018/006205 |

### A. CLASSIFICATION OF SUBJECT MATTER
Int.Cl. A23D7/00(2006.01)i,     A23D9/00(2006.01)i,     A23L27/10(2016.01)i,
A23L27/60(2016.01)i

According to International Patent Classification (IPC) or to both national classification and IPC

### B. FIELDS SEARCHED

Minimum documentation searched (classification system followed by classification symbols)
Int.Cl. A23D7/00, A23D9/00, A23L27/10, A23L27/60

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JMEDPlus/JST7580 (JDreamIII), CAplus/BIOSIS/MEDLINE/WPIDS (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2009-543562 A (GRAIN FOODS CRC LTD.) 10 December 2009, claims 67-79, examples 1-2 & WO 2008/009061 A1, claims 67-79, examples 1-2 & US | 1-19, 21-38, 40-41, 43-44, 46, 48-50 |
| Y | 2010/0143568 A1 & EP 2043458 A1 | 1-51 |
| X | JP 2-186942 A (MIYOSHI OIL & FAT CO., LTD.) 23 July 1990, claim 1, examples 7-8, table 1 (Family: none) | 1-19, 21-38, 40-41, 43-44, 46, 48-50 |
| Y | | 1-51 |

☒   Further documents are listed in the continuation of Box C.     ☐   See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 15 May 2018 (15.05.2018) | 22 May 2018 (22.05.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/006205

C (Continuation).   DOCUMENTS CONSIDERED TO BE RELEVANT

| Category* | Citation of document, with indication, where appropriate, of the relevant passages | Relevant to claim No. |
|---|---|---|
| X<br><br>Y | JP 7-327605 A (BARILLA G E R F LLI SPA) 19 December 1995, claims 1, 6, 10, example 1 & EP 685165 A1, claims1, 6, 10, example 1 & IT MI941105 A | 1-19, 21-38, 40-41, 43-44, 46, 48-50<br>1-51 |
| A | JP 2006-141291 A (ORIENTAL FOODS CO., LTD.) 08 June 2006, abstract (Family: none) | 1-51 |
| A | WO 97/41741 A1 (PALICKA, Josef) 13 November 1997, examples & DE 296023715 U & CZ 9601269 A & AU5890796 A | 1-51 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006141291 A
- JP 2009543562 A

- JP HEI2186942 A
- JP HEI7327605 A

**Non-patent literature cited in the description**

- Pocketbook of Food Additive Labelling. 2016
- List of Food Additive Substance Names for Labelling. the Pocketbook of Food Additive Labelling. 2011

- List of Food Additive Substance Names for Labelling. the Pocketbook of Food Additive Labelling. 2016